(19) Europäisches Patentamt
European Patent Office
Office européen des brevets

(11) **EP 4 586 440 A1**

(12) **EUROPEAN PATENT APPLICATION**
published in accordance with Art. 153(4) EPC

(43) Date of publication:
**16.07.2025 Bulletin 2025/29**

(21) Application number: **23869785.8**

(22) Date of filing: **27.06.2023**

(51) International Patent Classification (IPC):
*H02J 3/40* (2006.01)      *H02J 3/24* (2006.01)
*H02J 3/38* (2006.01)

(86) International application number:
**PCT/CN2023/102701**

(87) International publication number:
**WO 2024/066537 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.09.2022 CN 202211204453**

(71) Applicant: **Huawei Digital Power Technologies Co., Ltd.**
**Shenzhen, Guangdong 518043 (CN)**

(72) Inventors:
• **WANG, Shuo**
**Shenzhen, Guangdong 518043 (CN)**

• **ZHANG, Meiqing**
**Shenzhen, Guangdong 518043 (CN)**
• **DONG, Mingxuan**
**Shenzhen, Guangdong 518043 (CN)**
• **ZHAO, Mingquan**
**Shenzhen, Guangdong 518043 (CN)**
• **QU, Zisen**
**Shenzhen, Guangdong 518043 (CN)**
• **XIN, Kai**
**Shenzhen, Guangdong 518043 (CN)**
• **LIU, Yunfeng**
**Shenzhen, Guangdong 518043 (CN)**

(74) Representative: **Epping - Hermann - Fischer Patentanwaltsgesellschaft mbH**
**Schloßschmidstraße 5**
**80639 München (DE)**

(54) **POWER SUPPLY SYSTEM AND GRID-FORMING CONTROL METHOD**

(57)      This application provides a power supply system and a grid-forming control method, to increase a frequency synchronization speed of a grid-forming power generation device. The power supply system may include at least one new energy power generation device. The new energy power generation device may include a power converter and a control apparatus. The control apparatus may output an output voltage phase of the power converter based on a difference between a target output parameter of the power converter and an output parameter at a point of coupling, and adjust the output voltage phase of the power converter when a phase difference of a voltage at the point of coupling within a threshold time is greater than a preset threshold.

FIG. 3

EP 4 586 440 A1

## Description

## CROSS-REFERENCE TO RELATED APPLICATIONS

This application claims priority to Chinese Patent Application No. 202211204453.7, filed with the China National Intellectual Property Administration on September 29, 2022 and entitled "POWER SUPPLY SYSTEM AND GRID-FORMING CONTROL METHOD", which is incorporated herein by reference in its entirety.

## TECHNICAL FIELD

This application relates to the field of power control technologies, and in particular, to a power supply system and a grid-forming control method.

## BACKGROUND

A voltage and a frequency in a traditional power system are supported by a traditional synchronous generator. In other words, the voltage in the traditional power system is established by the traditional synchronous generator. An amplitude and the frequency of the voltage in the power system are determined based on an amplitude and a frequency of an output voltage of the synchronous generator. Strong inertia support and strong primary frequency modulation support are provided for the frequency of the output voltage through inherent rotating rotor/shaft inertia control, speed regulator control, steam storage of a steam generator, and the like of the traditional synchronous generator; and strong reactive power support is provided by an excitation control system and a strong excitation capability of the traditional synchronous generator for the amplitude of the output voltage.

With growth of new energy power generation devices in a power system in scale, the new energy power generation devices are required to support an amplitude and a frequency of a voltage of the power system. How to support the frequency of the voltage of the power system by the new energy power generation device is an urgent problem to be resolved.

## SUMMARY

This application provides a power supply system and a grid-forming control method, to increase a frequency synchronization speed of the power supply system.

According to a first aspect, an embodiment of this application provides a power supply system. The power supply system may include at least one new energy power generation device. Any new energy power generation device may include a power converter and a control apparatus. The power converter may be coupled to a power grid via a point of coupling, and the point of coupling may be a coupling point at which the new energy power generation device is connected to the power supply system. The power converter may be configured to convert direct-current electric energy into alternating-current electric energy under control of the control apparatus. The control apparatus may obtain a target output parameter of the power converter and an output parameter of the power converter at the point of coupling. The control apparatus may output an output voltage phase of the power converter based on a difference between the target output parameter and the output parameter, so that the control apparatus controls operating of the power converter based on the output voltage phase, for example, indicates that a phase of an output voltage of the power converter is the output voltage phase or is close to the output voltage phase. The control apparatus may further detect a voltage at the point of coupling. Generally, a phase fluctuation exists in the power grid, and a phase difference between the output voltage phase and a phase of the voltage at the point of coupling also changes. In this embodiment of this application, when a phase difference of the voltage at the point of coupling within a threshold time is greater than a preset threshold, the control apparatus may adjust the output voltage phase of the power converter output by the control apparatus, to adjust the phase of the output voltage of the power converter. When the phase fluctuation in the power grid is large, the phase of the output voltage of the power converter can be adjusted, to increase a speed of phase synchronization between the new energy power generation device and the power grid.

Optionally, the output parameter of the power converter at the point of coupling is any one of the following parameters: an active power output by the power converter, an active current output by the power converter, a direct current voltage on a direct current side of the power converter, and a square value of the direct current voltage. In an example, in a case in which the output parameter of the power converter at the point of coupling is the active power output by the power converter, the target output parameter of the power converter may be an active power reference parameter. In another example, in a case in which the output parameter of the power converter at the point of coupling is the active current output by the power converter, the target output parameter of the power converter may be an active current reference parameter. In still another example, in a case in which the output parameter of the power converter at the point of coupling is the direct current voltage on the direct current side of the power converter, the target output parameter of the power converter may be a direct current voltage reference parameter. In yet another example, in a case in which the output parameter of the power converter at the point of coupling is the square value of the direct current voltage, the target output parameter of the power converter may be a square value reference parameter of the direct current voltage.

In a possible design, the preset threshold is a value greater than 0. Optionally, the preset value is a value close to 0.

In a possible design, the control apparatus may obtain a voltage at the point of coupling at a first time point, and obtain a voltage at the point of coupling at a second time point, where the second time point is after the first time point, and an interval between the first time point and the second time point is less than the threshold time. The control apparatus may obtain the phase difference of the voltage at the point of coupling within the threshold time based on the voltage at the point of coupling at the first time point and the voltage at the point of coupling at the second time point.

In a possible design, the control apparatus may further determine the phase difference through the following operations. The control apparatus may obtain a three-phase voltage at the point of coupling, determine a voltage vector of the three-phase voltage in a direct axis-quadrature axis coordinate system corresponding to the output voltage phase output by the control apparatus, determine the phase difference based on the voltage vector, and adjust the output voltage phase of the power converter based on the phase difference. For example, the control apparatus may obtain the three-phase voltage at the point of coupling, and obtain an output phase that is output most recently. The control apparatus determines a voltage vector of the three-phase voltage in a direct axis-quadrature axis coordinate system corresponding to the most recently determined output phase, and determines the phase difference based on the voltage vector, thereby determining a phase jump in the power grid. The phase difference may indicate a phase jump degree. In a possible design, when adjusting the output voltage phase of the power converter when the phase difference between the output voltage phase and the phase of the voltage at the point of coupling is greater than the preset threshold, the control apparatus may perform following operations: If the phase difference is greater than a first phase threshold, it may indicate a large phase fluctuation in the power grid, the control apparatus may adjust the output voltage phase based on the phase difference, to synchronize an output voltage phase obtained through adjustment with a power grid phase, and the control apparatus may set the output voltage phase to a sum of the phase of the voltage at the point of coupling and the phase difference, where the first phase threshold is greater than 0. If the phase difference is less than a first phase threshold, it may indicate a small phase fluctuation in the power grid, and the control apparatus adjusts the output voltage phase, for example, increases the output voltage phase by a preset first value. Optionally, the first value may be 0 or a value close to 0. The output voltage phase can be close to the phase of the voltage at the point of coupling.

In this embodiment of this application, the phase difference being greater than the first phase threshold may indicate that a large leading or lagging phase jump occurs in the power grid phase. The control apparatus may adjust or correct, based on the phase difference, the output voltage phase output to the power converter, so that an output voltage phase obtained through adjustment or correction is close to the power grid phase. This accelerates frequency synchronization. The phase difference being less than or equal to the first phase threshold may indicate that no large phase jump occurs in the power grid phase, and the control apparatus may adjust or correct the output voltage phase based on the preset first value. Optionally, the first value may be 0. Such a design can reduce complexity of determining the output voltage phase by the control apparatus. Therefore, the control apparatus may use a same control loop when no large phase jump occurs in the power grid or the large phase jump occurs in the power grid.

In a possible design, when outputting the output voltage phase of the power converter based on the deviation between the target output parameter and the output parameter, the control apparatus may perform the following operations: determining the deviation between the target output parameter and the output parameter as a parameter deviation; obtaining an output frequency based on the parameter deviation; and obtaining an output phase based on the output frequency. The control apparatus may supply the output phase to the power converter as an output voltage phase instruction for the power converter, and output the output voltage phase of the power converter after the power converter modulates the output phase. In other words, the phase of the output voltage of the power converter is the output voltage phase. Then, the control apparatus may detect the voltage at the point of coupling, and adjust the output voltage phase of the power converter when the phase difference of the voltage at the point of coupling within the threshold time is greater than the preset threshold, to implement a closed-loop control process of adjusting the output voltage phase of the power converter.

In a possible design, the control apparatus may determine the deviation between the target output parameter and the output parameter as the parameter deviation in a plurality of manners. It may be understood that the control apparatus may determine the parameter deviation in any one of the manners provided in this embodiment of this application. In an example, the control apparatus may determine the deviation between the target output parameter and the output parameter as the parameter deviation.

In another example, the control apparatus may adjust the parameter deviation based on a quadrature-axis component of the voltage vector and a preset first proportional coefficient. For example, the control apparatus may determine a deviation correction amount based on the quadrature-axis component of the voltage vector and the preset first proportional coefficient, and adjust the deviation between the target output parameter and the output parameter based on the deviation correction amount, to obtain a parameter deviation obtained through adjustment.

In still another example, the control apparatus may adjust the parameter deviation based on the phase difference. For example, if the phase difference is less than a third phase threshold, the parameter deviation is adjusted based on the phase difference, where the third phase threshold is greater than 0. For example, the deviation correction amount corresponding to the phase difference is determined based on the phase difference and a preset second correspondence. The second correspondence may represent a correspondence between the phase difference and the deviation correction amount. If the phase difference is greater than a third phase threshold, the parameter deviation is increased by a preset second value, and the parameter deviation is adjusted.

In a possible design, the control apparatus may obtain the output frequency based on the parameter deviation in a plurality of manners. It may be understood that the control apparatus may determine the output frequency in any one of the manners provided in this embodiment of this application. In an example, the control apparatus may perform integration on a ratio of a reference deviation to a virtual inertia to obtain the output frequency.

In another example, the control apparatus may adjust the output frequency based on the quadrature-axis component of the voltage vector and a preset second proportional coefficient. In such a design, the control apparatus adjusts a reference output frequency, so that an output frequency obtained through adjustment is close to a power grid frequency. The control apparatus performs integration on the output frequency obtained through adjustment, to obtain an output voltage phase, so that a change of the output voltage phase is close to a change of the power grid phase. This further increases a frequency synchronization speed.

In still another example, the control apparatus may determine voltages of a plurality of preset frequency bands based on the quadrature-axis component of the voltage vector, and adjust the output frequency based on the voltage of each frequency band and a proportional coefficient corresponding to each frequency band. The control apparatus may determine, based on the voltage of each frequency band and the proportional coefficient corresponding to each frequency band, an output frequency adjustment amount corresponding to each frequency band. The output frequency is adjusted based on a sum of the output frequency adjustment amounts of all the frequency bands. Such a design can enhance damping effect on oscillation of the preset frequency band.

In a possible design, in the power supply system provided in this embodiment of this application, when the phase difference of the voltage at the point of coupling within the threshold time is greater than the preset threshold, an output impedance of the power converter is greater than 0. Therefore, the power converter has high stability. If an output power at the point of coupling is used as an input adjustment instruction for the power converter, when the phase difference of the voltage at the point of coupling within the threshold time is greater than the preset threshold, the output impedance of the power converter changes from greater than 0 to less than 0 in a first time period. Optionally, the output impedance of the power converter gradually increases in a period of time preceding the first time period. The output impedance of the power converter also gradually increases in a period of time following the first time period. Therefore, the output impedance of the power converter is in a "Z" shape.

According to a second aspect, an embodiment of this application provides a control apparatus. The control apparatus may be configured to control operating of a power converter in a new energy power generation device. The control apparatus includes a processor and a memory. The memory stores computer program instructions. The processor executes the computer program instructions, to implement a function or an operation of the control apparatus in the power supply system in any one of the first aspect and the designs of the first aspect.

According to a third aspect, an embodiment of this application provides a grid-forming control method. The method may be applied to a new energy power generation device. The new energy power generation device includes a power converter and a control apparatus, the power converter is coupled to a power grid via a point of coupling, and the power converter is configured to convert direct-current electric energy into alternating-current electric energy under control of the control apparatus. The control apparatus may perform the control method. The method includes: obtaining a target output parameter of the power converter and an output parameter at the point of coupling; outputting an output voltage phase of the power converter based on a difference between the target output parameter and the output parameter; and detecting a voltage at the point of coupling, and adjusting the output voltage phase of the power converter when a phase difference of the voltage at the point of coupling within a threshold time is greater than a preset threshold.

In a possible design, the adjusting the output voltage phase of the power converter when a phase difference of the voltage at the point of coupling within a threshold time is greater than a preset threshold further includes: obtaining a voltage at the point of coupling at a first time point; obtaining a voltage at the point of coupling at a second time point, where an interval between the first time point and the second time point is less than the threshold time; and obtaining the phase difference of the voltage at the point of coupling within the threshold time based on the voltage at the point of coupling at the first time point and the voltage at the point of coupling at the second time point.

In a possible design, the adjusting the output voltage phase of the power converter when a phase difference of the voltage at the point of coupling within a threshold time is greater than a preset threshold further includes: obtaining a three-phase voltage at the point of coupling; determining a voltage vector of the three-phase voltage in a direct axis-quadrature axis coordinate system corresponding to the output phase of the control apparatus; determining the phase difference based on the voltage vector; and adjusting the output voltage phase of the power converter based on the phase difference.

In a possible design, the adjusting the output voltage phase of the power converter based on the phase difference includes: if the phase difference is greater than a first phase threshold, adjusting the output phase based on the phase difference, where an adjustment value is the phase difference, and the first phase threshold is greater than 0; or if the phase difference is less than the first phase threshold, increasing the output phase by a preset first value.

In a possible design, the preset threshold is greater than 0.

In a possible design, the output parameter at the point of coupling is any one of the following parameters: an active power output by the power converter, an active current output by the power converter, a direct current voltage on a direct current side of the power converter, and a square value of the direct current voltage.

In a possible design, the outputting an output voltage phase of the power converter based on a difference between the target output parameter and the output parameter includes: obtaining a parameter deviation based on the deviation between the target output parameter and the output parameter; obtaining an output frequency based on the parameter deviation; obtaining an output phase based on the output frequency; and outputting the output voltage phase of the power converter after the power converter modulates the output phase.

In a possible design, when the obtaining a parameter deviation based on the deviation between the target output parameter and the output parameter further includes: adjusting the parameter deviation based on a quadrature-axis component of the voltage vector and a preset first proportional coefficient.

In a possible design, the obtaining a parameter deviation based on the deviation between the target output parameter and the output parameter further includes: if the phase difference is greater than a third phase threshold, adjusting the parameter deviation based on the phase difference, where the third phase threshold is greater than 0; or if the phase difference is less than the third phase threshold, increasing the parameter deviation by a preset second value.

In a possible design, the obtaining an output frequency based on the parameter deviation further includes: adjusting the output frequency based on the quadrature-axis component of the voltage vector and a preset second proportional coefficient.

In a possible design, the obtaining an output frequency based on the parameter deviation further includes: determining voltages of a plurality of preset frequency bands based on the quadrature-axis component of the voltage vector; and adjusting the output frequency based on a proportional coefficient corresponding to each frequency band and the voltage of each frequency band.

In a possible design, when the phase difference of the voltage at the point of coupling within the threshold time is greater than the preset threshold, an output impedance of the power converter is greater than 0. If an output power at the point of coupling is used as an input adjustment instruction for the power converter, when the phase difference of the voltage at the point of coupling within the threshold time is greater than the preset threshold, the output impedance of the power converter changes from greater than 0 to less than 0 in a first time period.

According to a fourth aspect, an embodiment of this application further provides a computer-readable storage medium. The computer-readable storage medium includes a computer program, and when the computer program is run on a control apparatus, the control apparatus is enabled to perform a function or an operation of the control apparatus in the power supply system in any one of the first aspect and the designs of the first aspect, or the control apparatus is enabled to perform the method provided in any one of the third aspect and the designs of the third aspect. According to a fifth aspect, an embodiment of this application further provides a computer program product, including instructions. When the instructions are run on a computer, the computer is enabled to perform a function of a control apparatus in the power supply system in any one of the first aspect and the designs of the first aspect, or the control apparatus is enabled to perform the method provided in any one of the third aspect and the designs of the third aspect. For beneficial effect of the second aspect to the fifth aspect, refer to the beneficial effect of the first aspect. Details are not described again.

**BRIEF DESCRIPTION OF DRAWINGS**

FIG. 1 is a diagram of an application scenario according to an embodiment of this application;
FIG. 2 is a diagram of a grid-forming control process;
FIG. 3 is a diagram of a structure of a power supply system according to an embodiment of this application;
FIG. 4 is a schematic flowchart of a grid-forming control method according to an embodiment of this application;
FIG. 5 is a diagram of an algorithm procedure for determining an output voltage phase;
FIG. 6 is a diagram of an algorithm procedure for determining an output voltage phase according to an embodiment of this application;
FIG. 7 is a schematic flowchart of a grid-forming control method according to an embodiment of this application;

FIG. 8 is a diagram of an algorithm procedure of a grid-forming control method according to an embodiment of this application;

FIG. 9 is a diagram of an algorithm procedure of a grid-forming control method according to an embodiment of this application;

FIG. 10 is a schematic flowchart of a grid-forming control method according to an embodiment of this application;

FIG. 11 is a diagram of an algorithm procedure of a grid-forming control method according to an embodiment of this application;

FIG. 12 is a diagram of an algorithm procedure of a grid-forming control method according to an embodiment of this application;

FIG. 13 is a schematic flowchart of a grid-forming control method according to an embodiment of this application;

FIG. 14 is a diagram of an algorithm procedure of a grid-forming control method according to an embodiment of this application;

FIG. 15 is a diagram of an algorithm procedure of a grid-forming control method according to an embodiment of this application;

FIG. 16 is a diagram of an algorithm procedure of a grid-forming control method according to an embodiment of this application; and

FIG. 17 is a diagram of an algorithm procedure of a grid-forming control method according to an embodiment of this application.

## DESCRIPTION OF EMBODIMENTS

Terms in embodiments of this application are used only for the purpose of describing specific embodiments, but are not intended to limit this application. The terms "one", "a", "the", "the foregoing", "this", and "the one" of singular forms used in this specification and the appended claims of this application are also intended to include expressions such as "one or more", unless otherwise specified in the context clearly. It should be further understood that, in embodiments of this application, "one or more" refers to one, two, or more, and "and/or" describes an association relationship between associated objects, and indicates that three relationships may exist. For example, A and/or B may indicate the following cases: Only A exists, both A and B exist, and only B exists, where A and B may be singular or plural. The character "/" usually indicates an "or" relationship between the associated objects.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and variants thereof all mean "include but are not limited to", unless otherwise specifically emphasized in another manner.

To make objectives, technical solutions, and advantages of this application clearer, the following further describes this application in detail with reference to accompanying drawings. First, an application scenario of embodiments of this application is described.

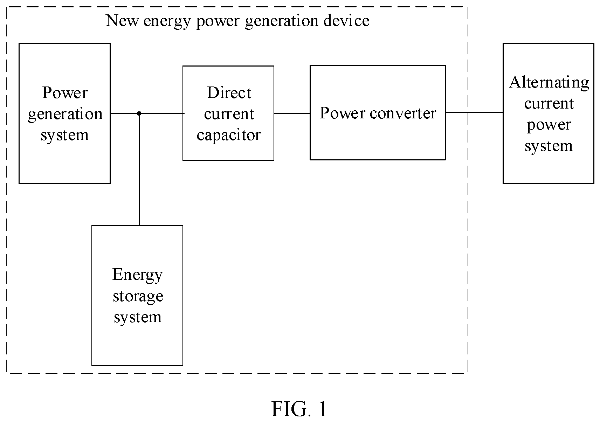

As shown in FIG. 1, a grid-forming control solution provided in embodiments of this application may be applied to a grid-forming power generation system. The grid-forming power generation system includes a power generation system, a power converter, and an alternating current power system. The power generation system may include one or both of a photovoltaic power generation system and a wind power generation system. A new energy power generation device in this application may be a device including a power generation system and a power converter. The power converter may convert direct-current electric energy into alternating-current electric energy.

In some examples, the power generation system in the new energy power generation device may be a photovoltaic power generation system. The power converter may be an inverter. The photovoltaic power generation system may input a power to a power grid via the inverter. In some other examples, the power generation system in the new energy power generation device may be a wind power generation system, and the wind power generation system may include a synchronous motor, a doubly-fed induction generator, or the like. The power converter may be a back-to-back power converter.

In the new energy power generation device, the power converter may serve as a grid-connecting interface of the power generation system, and the power generation system is grid-connected to the alternating current power system via the power converter. Specifically, the power generation system may supply direct-current electric energy to the power converter via a direct current capacitor. A connection point between a power electronic device and the alternating current power system may be generally referred to as a point of coupling. The power converter may convert direct-current electric energy generated by the power generation system into alternating-current electric energy and output the alternating-current electric energy to the alternating current power system. The alternating current power system may supply power to a load. Specifically, the alternating current power system may be an alternating current power grid that supplies an industrial frequency alternating current to the load. The alternating current power grid may be briefly referred to as a power grid in this application.

Optionally, the new energy power generation device may include an energy storage system. The energy storage system may store electric energy provided by the power generation system. The energy storage system may also store electric energy provided by the alternating current power system.

In an existing alternating current power system, an amplitude and a frequency of a voltage of the alternating current power system are generally supported by a synchronous generator. In other words, the synchronous generator dominates the amplitude and the frequency of the voltage of the alternating current power system. However, with an increasing proportion of new energy power generation devices in a power system, the new energy power generation devices are increasingly required to support an amplitude and a frequency of a power grid.

An existing new energy power generation device usually implements a grid-forming capability by simulating a mechanism of generating a frequency (ω) of an output voltage and an amplitude (E) of the output voltage of the synchronous generator. A new energy station is connected to the power grid via a common access point or a point of common coupling/connection (point of common coupling/connection, PCC). The new energy power generation device is connected to the new energy station via the point of coupling. It can be learned that the new energy power generation device is also connected to the power grid via the PCC point.

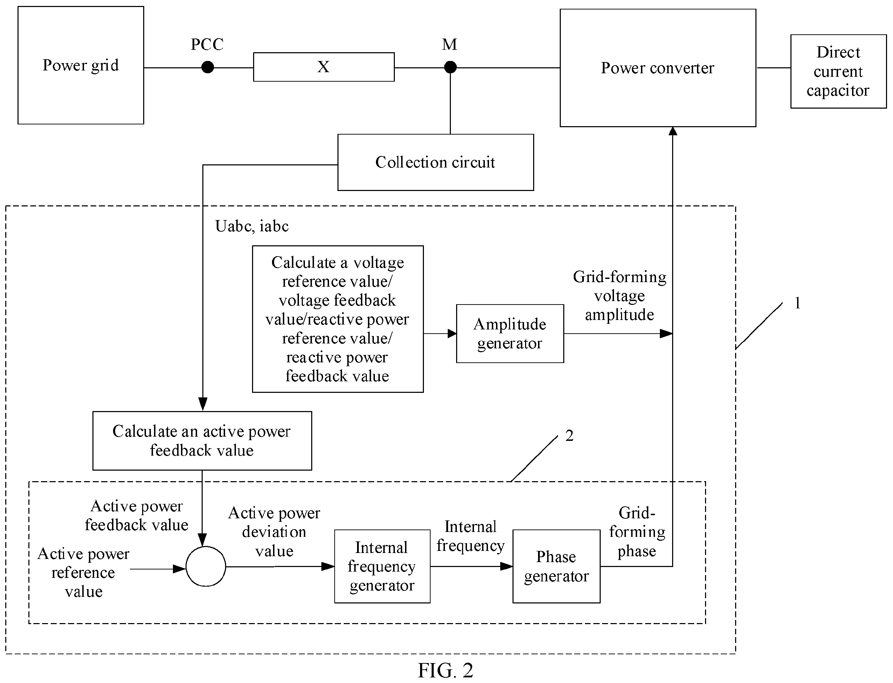

FIG. 2 shows an implementation process of grid-forming control for a new energy power generation device. A black dot M in FIG. 2 may represent a point of coupling of a power converter, and a voltage at the point of coupling may be referred to as a terminal voltage. Generally, the point of coupling may be a location at which an output filter of the power converter is close to an alternating current power grid side. Optionally, if the output filter of the power converter is an L filter, the point of coupling may be considered as a location at which the L-shaped filter is close to a power grid side. If the output filter of the power converter is an LC filter or an LCL filter, the point of coupling may be considered as a location on the output filter, namely, the filter capacitor C.

A collection circuit in the new energy power generation device may collect the voltage and a current at the point of coupling. The voltage at the point of coupling is a three-phase voltage, including an A-phase voltage, a B-phase voltage, and a C-phase voltage. For ease of description, the three-phase voltage is briefly denoted as $u_{abc}$ in this application. The current at the point of coupling is a three-phase current, including an A-phase current, a B-phase current, and a C-phase current. In this application, the three-phase current is briefly denoted as $i_{abc}$. In this embodiment of this application, an equivalent reactance of a transmission line between the point of common coupling (for example, the PCC in FIG. 2) and the point of coupling M may be denoted as X.

A dashed-line box 1 in FIG. 2 shows an existing grid-forming control process of the new energy power generation device. The process may be performed by a processor, a controller, or a control apparatus in the new energy power generation device. The following provides descriptions by using an example in which the control apparatus performs the existing grid-forming control process.

The control apparatus may obtain, through calculation based on the voltage and the current at the point of coupling, an actually output active power of the power converter. The actually output active power is briefly referred to as an active power feedback value $P_{feedback}$. The control apparatus may perform a processing procedure of determining an output voltage phase of the power converter, for example, a control process shown in a dashed-line box 2 in FIG. 2. The control apparatus determines, based on the active power feedback value and an active power reference value, a deviation between the active power feedback value $P_{feedback}$ and the reference value $P_{ref}$, namely, an active power deviation value. The control apparatus may obtain an internal frequency through calculation based on the active power deviation value and via an output voltage frequency (internal frequency) generator. The control apparatus obtains a grid-forming phase (phase angle) $\theta_m$ through calculation based on the internal frequency and via a phase (phase angle) generator, that is, obtains the output voltage phase (instruction) of the power converter. The power converter may adjust a phase of an output voltage of the power converter based on the output voltage phase provided by the control apparatus. For example, the power converter changes the output voltage of the power converter based on the output voltage phase and in an electric energy modulation manner, and the phase of the output voltage is the output voltage phase.

Generally, the control apparatus may control operating of the power converter based on a grid-forming voltage amplitude E (that is, an output voltage amplitude) and the grid-forming phase $\theta_m$ (that is, the output voltage phase) and in a power converter control manner such as a pulse width adjustment control technology. Optionally, the grid-forming voltage amplitude E may be a preset voltage amplitude. Alternatively, the output voltage amplitude may be implemented through outer-loop control. For example, the control apparatus may obtain the grid-forming voltage amplitude (output voltage amplitude) E through calculation based on a voltage reference value at the point of coupling, a voltage feedback value at the point of coupling, the reactive power reference value, or the reactive power feedback value and via an amplitude generator. In some examples, the control apparatus may further implement closed-loop adjustment through inner-loop control on the output voltage amplitude E and the grid-forming phase $\theta_m$, and then control operating of the power converter in the power converter control manner such as the pulse width adjustment control technology. For example, an implementation form of inner-loop control may be dual-loop control based on voltage control and current control.

Generally, a location of an output voltage (internal potential) may be configured by the control apparatus, or the control apparatus may consider a voltage at a specific location as an output voltage. Optionally, the location of the output voltage may be the same as or different from a location of the point of coupling.

The control apparatus controls the power converter based on the grid-forming phase $\theta_m$ and the output voltage amplitude E. To facilitate description of a relationship between a grid-forming output voltage $Ee^{j\theta_m}$ and a power grid voltage $U_g e^{j\theta_g}$, it is assumed herein that the location of the output voltage is configured to be the same as the location of the point of coupling, for example, the black dot M in FIG. 2. A relationship of the active power output by the power converter may be denoted as

$$P = \frac{EUg\sin(\theta_m - \theta_g)}{X}$$

. Ug indicates an amplitude of the power grid voltage, $\theta_g$ indicates a phase of the power grid voltage (phase angle), $U_g e^{j\theta_g}$ indicates a voltage vector of the three-phase voltage at the point of common coupling in a stationary coordinate system, and X may indicate the reactance between the point of coupling and a location corresponding to the PCC point.

With reference to the dashed-line box 2 in FIG. 2, it is assumed that a power grid load suddenly increases and a power grid frequency decreases at present, in other words, a change rate of the power grid phase $\theta_g$ becomes small. In this case, the active power output by the power converter increases, that is, the active power feedback value increases. Then, the active power deviation value decreases, an output voltage frequency obtained via the internal frequency generator decreases, and a change rate of the grid-forming phase output via the phase generator also decreases. It can be learned that a change of the grid-forming phase determined by the control apparatus may decelerate with deceleration of a change of the power grid phase. Otherwise, it is assumed that a power grid load suddenly decreases and a power grid frequency increases, in other words, a change rate of the power grid phase $\theta_g$ becomes large. In this case, the active power output by the power converter decreases, that is, the active power feedback value decreases. Then, the active power deviation value increases, an output voltage frequency obtained via the internal frequency generator increases, and a change rate of the grid-forming phase output via the phase generator also increases. It can be learned that a change of the grid-forming phase determined by the control apparatus may accelerate with acceleration of a change of the power grid phase.

Because the change rate of the output voltage phase determined by the control apparatus may change with the change rate of the power grid phase, the phase is a result obtained through integration on a time based on the frequency, and the phase change rate is the frequency. It can be learned that an algorithm procedure in the dashed-line box 2 is a negative feedback adjustment mechanism, so that the output voltage frequency of the power converter is gradually close to the power grid frequency. The control apparatus performs the algorithm procedure in the dashed-line box 2 for multiple times, so that frequency synchronization can be implemented, and a power output can reach a steady state. The power converter serving as a grid-connecting interface in the new energy power generation device has a voltage source characteristic under action of the foregoing control algorithm. However, in a case of a fault of the power grid, the power converter is prone to a current amplitude increase and has an overcurrent risk. In addition, in the foregoing grid-forming control algorithm, because the output voltage frequency of the new energy power generation device is generated by driving an inertia unit and a damping unit based on a deviation between the active power reference value and the active power actual value, and has a characteristic of a slow dynamic response, it is difficult to quickly synchronize the output voltage frequency or the output voltage phase of the new energy power generation device with the frequency or the phase of the power grid voltage. This may cause a transient stability problem of the new energy power generation device, that is, transient out-of-synchronization. As a result, the new energy power generation device fluctuates greatly in output power or is disconnected from the power grid, affecting security and stability of the power grid.

In view of this, embodiments of this application provide a power supply system, to implement a fast frequency synchronization capability in a case of a fault of a power grid. Based on a same inventive concept, this application further provides a grid-forming control method. In this application, the fault of the power grid may include an operating condition in which a large disturbance occurs in the power grid, for example, a circuit fault of a power transmission line.

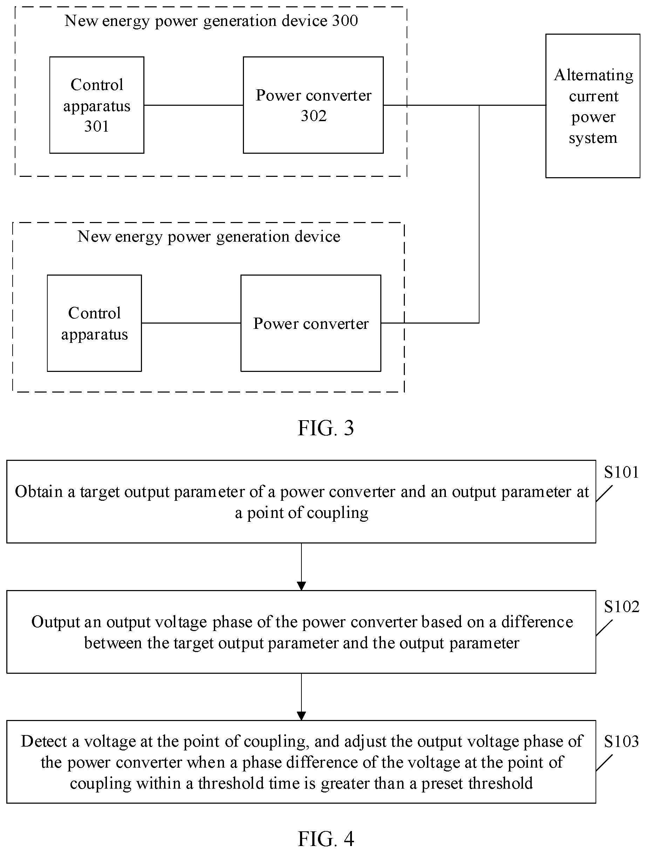

As shown in FIG. 3, the power supply system may include at least one new energy power generation device. Any new energy power generation device may include a power converter and a control apparatus. For ease of description, a new energy power generation device 300 is used as an example. The new energy power generation device 300 may include a power converter 302 and a control apparatus 301. The power converter 302 is coupled to a power grid via a point of coupling, and the power converter 302 is configured to convert direct-current electric energy into alternating-current electric energy under control of the control apparatus 301. The control apparatus 301 may adjust an output voltage phase of the power converter 302. The grid-forming control method provided in this application may be performed by the control apparatus 301. The control apparatus 301 may be used in the new energy power generation device including the power converter. The control apparatus 301 may determine an output voltage phase of the power converter, and supply the output voltage phase to the power converter, so that the power converter outputs a voltage according to an indication of the output voltage phase, and the phase of the output voltage of the power converter is equal to or close to the output voltage phase output by the control apparatus 301.

The new energy power generation device may include power parameter collection circuits such as a voltage collection circuit and a current collection circuit. The voltage collection circuit may collect a voltage at the point of coupling of the power converter 302, for example, a three-phase voltage. Optionally, the voltage collection circuit may also collect a voltage at a direct current capacitor, so that the control apparatus 301 can obtain a voltage on a direct current side of the power converter. The current collection current may collect a current output by the power converter 302, for example, a three-phase current.

Based on the foregoing related descriptions of the new energy power generation device, the following describes the grid-forming control method provided in embodiments of this application. FIG. 4 shows a grid-forming control method that may be performed by the control apparatus 301. The grid-forming control method may include the following steps.

Step S101: Obtain a target output parameter of a power converter and an output parameter at a point of coupling. The control apparatus 301 may obtain a three-phase voltage and a three-phase current at the point of coupling of the power converter 302, to calculate or obtain an active power and an active current that are input by the power converter 302 to a power grid.

The control apparatus 301 may determine an output voltage phase based on the output parameter ($m_{feedback}$) of the power converter 302 at the point of coupling and the target output parameter ($m_{ref}$). The output parameter of the power converter 302 at the point of coupling may directly or indirectly represent the active power. Optionally, the output parameter of the power converter 302 at the point of coupling may be any one of the following parameters: the active power output by the power converter, the active current output by the power converter, a direct current voltage on a direct current side of the power converter, and a square value of the direct current voltage on the direct current side of the power converter.

In an actual application scenario, it is assumed that the power converter 302 outputs a power to the power grid, and the active power output by the power converter 302 increases. In this case, the active current increases. If the active power output by the power converter 302 decreases, the active current decreases. Therefore, a change of the active current can indirectly represent a change of the active power. Similarly, if the active power output by the power converter 302 increases, the direct current voltage on the direct current side of the power converter 302 decreases. If the active power output by the power converter 302 decreases, the direct current voltage on the direct current side of the power converter 302 increases. Therefore, a change of the direct current voltage on the direct current side of the power converter 302 may indirectly represent the change of the active power. Alternatively, a change of the square value of the direct current voltage may indirectly represent the change of the active power.

The target output parameter $m_{ref}$ may also be referred to as a target value of the output parameter of the power converter 302 at the point of coupling. The target output parameter $m_{ref}$ is usually used as a target achieved by controlling the power converter 302 by the control apparatus 301 based on the target output parameter $m_{ref}$, so that after the power converter 302 inputs the power to the power grid, the output parameter $m_{feedback}$ is equal to or close to a reference value $m_{ref}$. For example, the output parameter of the power converter 302 at the point of coupling is the active power. The control apparatus 301 may control the power converter by using a reference value $P_{ref}$ of the active power as a control target, so that an active power actually output by the power converter, namely, an active power $P_{feedback}$ output by the power converter 302 at the point of coupling is equal to or close to the reference value $P_{ref}$ of the active power.

For example, the control apparatus 301 may obtain power parameters such as the three-phase voltage $u_{abc}$ and the three-phase current of the power converter at the point of coupling. The control apparatus 301 may determine the output parameter $m_{feedback}$ based on the three-phase voltage $u_{abc}$ and the three-phase current. Alternatively, the control apparatus 301 may obtain the output parameter $m_{feedback}$. The output parameter $m_{feedback}$ may be any one of the following parameters: the active power output by the power converter, the active current output by the power converter, the direct current voltage on the direct current side of the power converter, and the square value of the direct current voltage on the direct current side of the power converter.

For example, the target output parameter is generally also referred to as a reference instruction of the output parameter, or a control target value of the output parameter of the power converter at the point of coupling, and indicates that the output parameter is equal to or close to the target output parameter when the control apparatus 301 controls the power converter to inject the active power into the power grid.

Step S102: Output the output voltage phase of the power converter based on a difference between the target output parameter and the output parameter.

The control apparatus 301 may obtain a deviation between the output parameter $m_{feedback}$ and the target output parameter $m_{ref}$ through calculation based on the output parameter of the power converter 302 at the point of coupling and the target output parameter, and the deviation may be referred to as a parameter deviation me1. For example, a relationship between the parameter deviation me1 and both the output parameter $m_{feedback}$ and the target output parameter $m_{ref}$ may be me1=$m_{ref}$ - $m_{feedback}$ or me1=$m_{feedback}$ - $m_{ref}$. This is not excessively limited herein. The control apparatus 301 may obtain an output voltage frequency ω1 based on the parameter deviation me1, and obtain an output voltage phase θ1 of the power converter based on the output voltage frequency ω1.

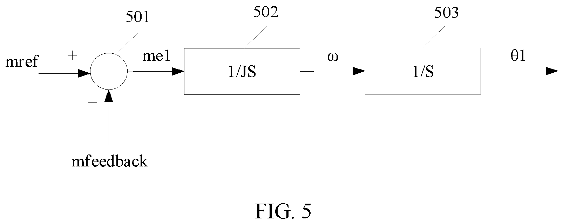

In a possible implementation, an algorithm procedure of the control apparatus 301 in step S102 may be shown in FIG. 5. In FIG. 5, a first adder unit 501, an output voltage frequency generator 502, and a phase generator 503 in the control apparatus 301 may jointly implement the operation of the control apparatus 301 in step S103. In FIG. 5, $m_{feedback}$ indicates the output parameter, $m_{ref}$ indicates the target output parameter, and me1 indicates the parameter deviation. The first adder unit 501 may be configured to calculate the deviation between $m_{ref}$ and $m_{feedback}$ to obtain the parameter deviation me1. The output voltage frequency generator 502 may simulate an inertia unit and a damping unit of a synchronous generator, to obtain an output voltage frequency (ω) based on the parameter deviation me1 of the output parameter. Optionally, the output voltage frequency generator 502 may obtain a reference output voltage frequency through calculation based on a deviation between the output active current and an active current reference value. Alternatively, the output voltage frequency generator 502 may obtain an output voltage frequency through calculation based on a deviation between an output direct current voltage and a direct current voltage reference value. Alternatively, the output voltage frequency generator 502 may obtain an output voltage frequency through calculation based on a deviation between an output active power and an active power reference value. For example, the output voltage frequency generator 502 may perform integration processing on a ratio $\frac{Pe1}{J}$ of a parameter deviation Pe1 between the output active power and the active power reference value to a virtual inertia J, to obtain the output voltage frequency ω1. The phase generator 503 may perform integration processing on a potential frequency ω1 to obtain the output voltage phase θ1.

Step S103: Detect a voltage at the point of coupling, and adjust the output voltage phase of the power converter when a phase difference of the voltage at the point of coupling within a threshold time is greater than a preset threshold.

In some examples, the control apparatus 301 obtains a voltage at the point of coupling at a first time point, and obtains a voltage at the point of coupling at a second time point, where an interval between the first time point and the second time point is less than the threshold time; and obtains the phase difference of the voltage at the point of coupling within the threshold time based on the voltage at the point of coupling at the first time point and the voltage at the point of coupling at the second time point. Optionally, the second time point may be after the first time point.

In some examples, the control apparatus 301 may detect the voltage at the point of coupling, to obtain the three-phase voltage at the point of coupling. The control apparatus 301 may determine a voltage vector of the three-phase voltage in a direct axis-quadrature axis coordinate system corresponding to the output voltage phase (which may be an output voltage phase output most recently) output by the control apparatus, determine the phase difference based on the voltage vector, and adjust the output voltage phase of the power converter based on the phase difference.

In a possible design, the control apparatus 301 may obtain the three-phase voltage $u_{abc}$ of the power converter at the point of coupling. The control apparatus 301 may determine projection information of the three-phase voltage $u_{abc}$ in a rotating coordinate system corresponding to an adjusted output voltage phase of the power converter in the previous step 103. The rotation coordinate system is also a direct (d) axis-quadrature (q)-axis coordinate system. A projection of the three-phase voltage $u_{abc}$ on a d axis (also a d-axis component) is briefly referred to as a d-axis voltage $u_d$ in this application. A projection of the three-phase voltage $u_{abc}$ on a quadrature axis (also a q-axis component) is briefly referred to as a q-axis voltage $u_q$ in this application. As described above, the control apparatus 301 may configure, based on a control algorithm or software, the power converter 302, to generate a grid-forming output voltage. The output voltage includes an output voltage amplitude and an output voltage frequency (phase). An output voltage location of the power converter may be configured to be the same as or different from the point of coupling. In an implementation, the output voltage location is configured to be the same as a location of the point of coupling. That the control apparatus 301 controls a terminal voltage at the point of coupling to be the output voltage may be understood as that, when a steady state is reached, an amplitude of the voltage at the point of coupling is the amplitude of the output voltage, and a phase of the voltage at the point of coupling is the phase of the output voltage. The control apparatus 301 may determine a phase deviation Δθ based on the projection information, that is, $u_d$ and $u_q$, of the three-phase voltage sampling data $u_{abc}$ at the point of coupling in a rotating coordinate system corresponding to the output voltage phase determined in the previous step S102. The phase deviation may represent a deviation between the output voltage phase of the power converter and the phase of the voltage at the point of coupling, and may indicate a phase jump of the power grid. Optionally, a relationship between the phase deviation Δθ and both the d-axis voltage $u_d$ and the q-axis voltage $u_q$ is

$$\Delta\theta = \arctan(\frac{u_q}{u_d})$$

.

In this embodiment of this application, because the output voltage phase output by the control apparatus 301 may lead the phase of the voltage at the point of coupling, or the output voltage phase may lag behind the phase of the voltage at the point of coupling, a phase deviation Δθ between the output voltage phase and the voltage phase at the point of coupling is positive or negative. However, in this embodiment of this application, it is convenient to determine whether to adjust the output voltage phase of the power converter. The control apparatus 301 may determine whether an absolute value of the phase deviation $\Delta\theta$ is greater than the preset threshold, that is, $|\Delta\theta|$. The phase deviation is denoted as $\Delta\theta$, and the phase difference is denoted as $|\Delta\theta|$, to distinguish the phase deviation from the phase difference.

The control apparatus 301 may adjust the output voltage phase of the power converter when the phase difference $|\Delta\theta|$ is greater than the preset threshold. For example, the control apparatus 301 may adjust, when the phase difference $|\Delta\theta|$ is greater than the preset threshold, the output voltage phase of the power converter output by the control apparatus 301. It is convenient for the power converter to adjust the output voltage of the power converter based on the adjusted output voltage phase, and the phase of the output voltage is equal to or close to the output voltage phase. Optionally, the preset threshold is equal to or close to 0. It can be learned that when there is a difference between the output phase and the phase of a grid connection voltage, the control apparatus 301 may adjust the phase of the output voltage of the power converter output by the control apparatus 301.

In a possible design, if the phase difference $|\Delta\theta|$ is greater than a first phase threshold, and the first phase threshold is a value greater than 0, the control apparatus 301 may adjust, based on the phase difference, the output voltage phase output by the control apparatus 301, so that the power converter adjusts the phase of the output voltage.

In an example, if the phase difference $|\Delta\theta|$ is greater than the first phase threshold, the phase deviation $\Delta\theta$ may be greater than the first phase threshold, or the phase deviation $\Delta\theta$ may be less than a second phase threshold. The second phase threshold is a value less than 0, and an absolute value of the second phase threshold is greater than or equal to the first phase threshold. The phase deviation $\Delta\theta$ is greater than the first phase threshold. It may indicate that a leading large phase jump occurs in the power grid. The phase deviation $\Delta\theta$ is less than the second phase threshold. It may indicate that a lagging large phase jump occurs in the power grid.

The control apparatus 301 may adjust the output voltage phase of the power converter (which is determined based on the deviation between the target output parameter and the output parameter) based on the phase deviation $\Delta\theta$, namely, the output voltage phase output by the control apparatus 301 in step S102. Specifically, if the phase deviation $\Delta\theta$ is greater than the first phase threshold, or the phase deviation $\Delta\theta$ is less than the second phase threshold, it may indicate that a large phase jump fault occurs in the power grid, and the control apparatus 301 may use the phase deviation $\Delta\theta$ as a phase adjustment amount (or an adjustment value). The control apparatus 301 may adjust, based on the phase adjustment amount, the output voltage phase output in step S102. For example, a sum of the output voltage phase output in step S102 and the phase adjustment amount is determined as the adjusted output voltage phase. The control apparatus 301 may output the adjusted output voltage phase to the power converter 302, and the power converter 302 may modulate the output voltage phase provided by the control apparatus 301, to adjust the phase of the output voltage of the power converter 302. The output voltage phase of the power converter output in step S102 is $\theta 1$, and the adjusted output voltage phase of the power converter in step S103 is $\theta 2$, to distinguish the unadjusted output voltage phase of the power converter from the adjusted output voltage phase of the power converter.

In another example, if the phase difference $|\Delta\theta|$ is less than the first phase threshold, the phase deviation $\Delta\theta$ may be less than the first phase threshold and greater than a second phase threshold. It may indicate that no large phase jump fault occurs in the power grid, and the control apparatus 301 may determine a preset first value as the phase adjustment amount. The control apparatus 301 may adjust, based on the phase adjustment amount, the output voltage phase output in step S102. For example, a sum of the output voltage phase output in step S102 and the phase adjustment amount is determined as the adjusted output voltage phase. The control apparatus 301 may control the power converter 302 based on the adjusted output voltage phase, to adjust the output voltage phase of the power converter. Optionally, the first phase threshold is 60°, and the second phase threshold is -60°. Optionally, the preset first value may be 0 or a value close to 0.

Optionally, if the phase difference is equal to the first phase threshold or equal to the second phase threshold, the control apparatus 301 may determine the phase difference as the phase adjustment amount, or determine the first value as the phase adjustment amount.

It can be learned from the foregoing description that the control apparatus 301 may adjust the phase $\theta 1$ of the output voltage of the power converter when a lagging or leading large phase jump occurs in the power grid, so that a change degree of the adjusted output voltage phase $\theta 2$ is close to a change degree of a power grid phase. This accelerates frequency synchronization, and avoids an out-of-synchronization problem caused by a large phase-angle jump.

In a possible implementation, the control apparatus 301 may implement step S103 according to a preset phase adjustment algorithm (or function). Optionally, the phase adjustment function may include one or a combination of a non-linear function, a linear function, a piecewise function, hysteresis, filtering, or the like. The phase adjustment amount may be adaptively adjusted based on information about the power grid voltage, such as the d-axis voltage and the q-axis voltage according to the phase adjustment function.

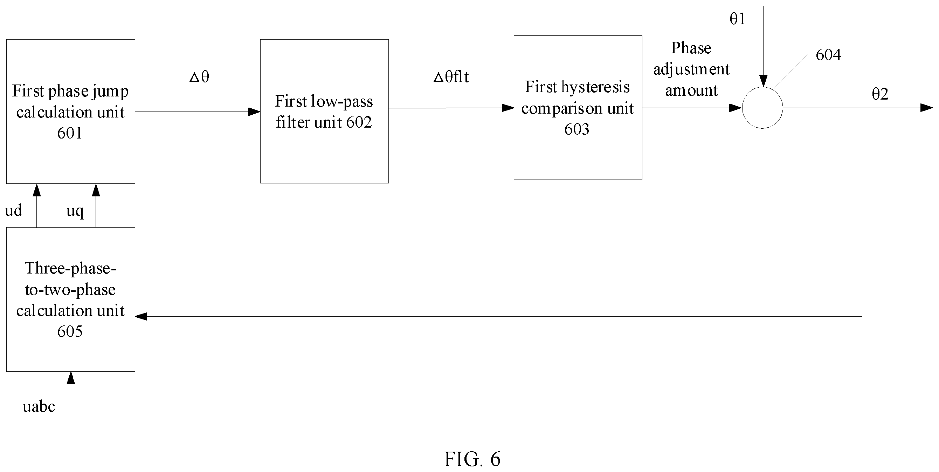

For example, FIG. 6 shows an algorithm procedure of adjusting the output voltage phase of the power converter. A first phase jump calculation unit 601, a first low-pass filter unit 602, a first hysteresis comparison unit 603, a second adder unit 604, and a three-phase-to-two-phase calculation unit 605 in the control apparatus 301 may jointly implement the operation in step S103 performed by the control apparatus 301.

The three-phase-to-two-phase calculation unit 605 in the control apparatus 301 may determine, based on a conversion relationship between a three-phase stationary coordinate system and a rotating coordinate system of the output voltage phase determined last time, a d-axis voltage ud and a q-axis voltage uq of a three-phase voltage at a present point of coupling in the rotating coordinate system of the output voltage phase determined last time.

The first phase jump calculation unit 601 may determine the phase deviation $\Delta\theta$ based on the d-axis voltage ud or the q-axis voltage uq, and input the phase deviation to the first low-pass filter unit 602. The first low-pass filter unit 602 may perform low-pass filtering processing on the phase deviation $\Delta\theta$, to filter out sampling noise or high-frequency disturbance, so as to obtain a phase deviation $\Delta\theta_{flt}$ obtained through filtering processing.

The first hysteresis comparison unit 603 may perform hysteresis comparison processing on the phase deviation $\Delta\theta_{flt}$ obtained through filtering processing, and output the phase adjustment amount to the second adder unit 604. For example, when the phase deviation $\Delta\theta_{flt}$ obtained through filtering processing is less than the first phase threshold and the phase deviation $\Delta\theta_{flt}$ obtained through filtering processing is greater than the second phase threshold, the phase adjustment amount output by the first hysteresis comparison unit to the second adder unit 604 is the preset first value. For example, the first value is 0.

The first hysteresis comparison unit 603 may output $\Delta\theta_{flt}$ to the second adder unit 604 when the phase deviation $\Delta\theta_{flt}$ obtained through filtering processing is greater than or equal to the first phase threshold. The first hysteresis comparison unit 603 may output $\Delta\theta_{flt}$ to the second adder unit 604 when the phase deviation $\Delta\theta_{flt}$ obtained through filtering processing is less than or equal to the second phase threshold. Optionally, the first phase threshold is 60°, and the second phase threshold is -60°.

The second adder unit 604 may perform addition processing on the output voltage phase $\theta1$ output in step S102 and the phase adjustment amount output by the first hysteresis comparison unit, to obtain the output voltage phase $\theta2$.

In a possible case, when the phase difference $|\Delta\theta|$ is less than the preset threshold, the control apparatus 301 may control the power converter based on the output voltage phase output in step S102. Optionally, when the phase difference $|\Delta\theta|$ is equal to the preset threshold, the control apparatus 301 may perform the operation performed when the phase difference $|\Delta\theta|$ is less than the preset threshold. Alternatively, the control apparatus 301 may perform the operation performed when the phase difference $|\Delta\theta|$ is greater than the preset threshold. This is not excessively limited in embodiments of this application.

It may be clear from the foregoing description that, in this embodiment of this application, the control apparatus 301 may implement functions in step S102 and step S103 via a same control loop. The control loop does not need to be switched based on phase fluctuation of the power grid.

In a possible implementation, in step S102, when outputting the output voltage phase of the power converter based on the deviation between the target output parameter and the output parameter, the control apparatus 301 may determine the deviation between the target output parameter and the output parameter as the parameter deviation, obtain an output frequency based on the parameter deviation, and obtain an output phase based on the output frequency.

To further increase a frequency synchronization speed, the control apparatus 301 may perform adjustment processing on the parameter deviation me1.

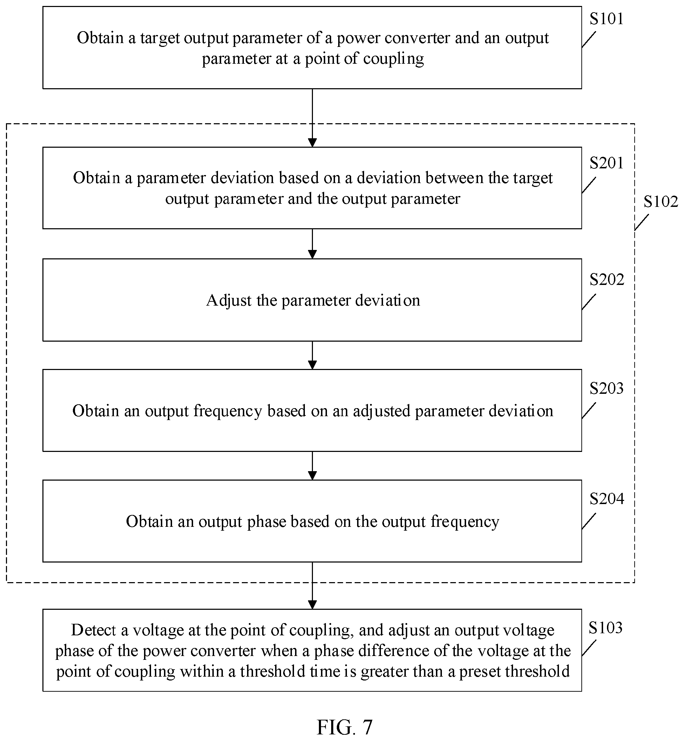

In a possible design, based on the grid-forming control method provided in the foregoing embodiment, the control apparatus 301 may perform adjustment processing on the parameter deviation in step S102, to accelerate frequency synchronization in a case of a power grid fault or large disturbance. FIG. 7 is a schematic flowchart of a grid-forming control method according to an example embodiment. The grid-forming control method may include the following steps.

Step S101: Obtain a target output parameter of a power converter and an output parameter at a point of coupling.

Step S201: Obtain a parameter deviation based on a deviation between the target output parameter and the output parameter.

The unadjusted parameter deviation is denoted as me1, and an adjusted parameter deviation is denoted as me2, to distinguish the unadjusted parameter deviation from the adjusted parameter deviation.

Specifically, the control apparatus 301 may obtain the deviation between the output parameter $m_{feedback}$ and the target output parameter $m_{ref}$ through calculation based on the output parameter and the target output parameter, and the deviation may be referred to as the parameter deviation me1. For example, a relationship between the parameter deviation me1 of the output parameter and both the output parameter $m_{feedback}$ and the target output parameter $m_{ref}$ may be me1=$m_{ref}$ - $m_{feedback}$ or me1=$m_{feedback}$ - $m_{ref}$. This is not excessively limited herein.

Step S202: Adjust the parameter deviation.

The control apparatus 301 may adjust the parameter deviation me1 based on a deviation adjustment amount, to obtain the adjusted parameter deviation me2.

Specifically, the control apparatus 301 may determine the deviation correction amount $\Delta$me based on a

q-axis voltage of a three-phase voltage in a two-phase rotating coordinate system and a preset deviation correction function. The preset deviation correction function may include one or a combination of a non-linear function, a linear function, a piecewise function, a hysteresis function, a filter function, or the like. For example, this embodiment of this application provides a plurality of specific implementations of the deviation correction function.

Implementation 1

The control apparatus 301 may adjust the parameter deviation based on a quadrature-axis component of a voltage vector and a preset first proportional coefficient. The deviation correction function may be a first linear function (or referred to as a first correspondence). The first correspondence may represent a correspondence between a q-axis voltage and the deviation correction amount. In some examples, the first correspondence may be $\Delta me = KP1 \times x + b_1$, where KP1 indicates a preset variable coefficient, or is referred to as the first proportional coefficient, $b_1$ indicates a preset constant, and x represents the q-axis voltage of the three-phase voltage. The control apparatus 301 may determine, based on the preset first correspondence and the q-axis voltage of the three-phase voltage, the deviation correction amount $\Delta me$ corresponding to the q-axis voltage of the three-phase voltage. Optionally, $b_1$ may be 0. The control apparatus 301 may determine a sum of the parameter deviation me1 and the deviation correction amount $\Delta me$ as a target parameter deviation me2. When a phase jump occurs in a power grid, the control apparatus 301 performs adjustment processing on the deviation between the output parameter and the target output parameter. This can accelerate frequency synchronization.

In an example, an output voltage location is configured to be the same as a location of the point of coupling. When a power grid frequency decreases, a power grid phase lags, and a projection $u_q$ of the voltage at the point of coupling on a q axis is a negative value. That is, the q-axis voltage is a negative value. The deviation correction amount $\Delta me$ obtained through calculation in step S202 is used to reduce the parameter deviation me1, and the adjusted parameter deviation me2 is less than the parameter deviation me1. Therefore, an output frequency decreases. On the contrary, when a power grid frequency increases, a power grid phase leads, and a projection $u_q$ of the voltage at the point of coupling on a q axis is a positive value. That is, the q-axis voltage is a positive value. The deviation correction amount $\Delta me$ obtained through calculation in step S202 is used to increase the parameter deviation me1, and the adjusted parameter deviation me2 is greater than the parameter deviation me1. Therefore, an output frequency increases.

Implementation 2

The control apparatus 301 may adjust the parameter deviation based on a phase difference if the phase difference is greater than a third phase threshold, where the third phase threshold is greater than 0. If the phase difference is less than the third phase threshold, the parameter deviation is increased by a preset second value.

In an example, if a phase difference $|\Delta\theta|$ is less than the third phase threshold, a phase deviation $\Delta\theta$ may be less than the third phase threshold, and the phase deviation $\Delta\theta$ may be greater than a fourth phase threshold. The fourth phase threshold is a value less than 0, and an absolute value of the fourth phase threshold is greater than or equal to the third phase threshold. It may indicate that no small phase jump fault occurs in a power grid. In another example, if a phase difference $|\Delta\theta|$ is greater than the third phase threshold, a phase deviation $\Delta\theta$ may be greater than the third phase threshold, or a phase deviation $\Delta\theta$ may be less than the fourth phase threshold. It may indicate that a small phase jump fault occurs in a power grid.

The deviation correction function may include a filter function and a hysteresis function. Optionally, the deviation correction function may further include a linear function or a non-linear function, to determine the phase deviation. The control apparatus 301 calculates the phase deviation $\Delta\theta$ of the power grid based on a d-axis voltage and a q-axis voltage. The phase deviation $\Delta\theta$ may represent a phase jump of a voltage in the power grid. Optionally, a relationship between the phase deviation $\Delta\theta$ and both the d-axis voltage $u_d$ and the q-axis voltage $u_q$ is

$$\Delta\theta = \arctan\left(\frac{u_q}{u_d}\right)$$

. The filter function in the deviation correction function may be used to perform filtering processing on the phase deviation $\Delta\theta$, to filter out sampling noise or high-frequency disturbance, so as to obtain a phase deviation $\Delta\theta_{flt}$ obtained through filtering processing. The phase deviation $\Delta\theta$ processed based on the filter function may be the phase deviation $\Delta\theta$ determined in step S 101 or the phase deviation $\Delta\theta$ determined based on the linear function or the non-linear function in the deviation correction function. This is not excessively limited in this application.

The hysteresis function in the deviation correction function may be used to compare a relationship between the phase deviation $\Delta\theta$ and the third phase threshold and the fourth phase threshold, and output the deviation correction amount $\Delta me$ based on a comparison result.

In a possible case, the control apparatus 301 may compare the relationship between the phase deviation $\Delta\theta$ and the third phase threshold and the fourth phase threshold. The phase deviation $\Delta\theta$ is greater than or equal to the third phase threshold, or the phase deviation is less than or equal to the fourth phase threshold. It may indicate that a small phase jump fault occurs in a power grid. The third phase threshold is greater than 0, and the fourth phase threshold is less than 0. Optionally, the third phase threshold is 10°, and the fourth phase threshold is -10°. In this case, in a possible implementation, the control apparatus 301 may obtain the deviation correction amount Δme through calculation based on a preset second linear function and the phase deviation Δθ. The second linear function may also be referred to as a second correspondence. The second correspondence may represent a correspondence between the phase deviation Δθ and the deviation correction amount Δme. For example, the second correspondence may be Δme = $KP2 \times x + b_2$, where KP2 indicates a preset variable coefficient or a third proportional coefficient, $b_2$ indicates a preset constant, and x represents the phase deviation Δθ or the phase deviation $Δθ_{flt}$ obtained through filtering processing. Optionally, $b_2$ may be 0. The control apparatus 301 may determine, based on the preset second correspondence and the phase deviation Δθ or the phase deviation $Δθ_{flt}$ obtained through filtering processing, the deviation correction amount Δme corresponding to the phase deviation Δθ or the phase deviation $Δθ_{flt}$ obtained through filtering processing. In another possible implementation, the control apparatus 301 may obtain the deviation correction amount Δme through calculation based on the first correspondence and the q-axis voltage.

In another possible case, the control apparatus 301 may compare the relationship between the phase deviation Δθ and the third phase threshold and the fourth phase threshold. The phase deviation Δθ is less than the third phase threshold and greater than the fourth phase threshold. It may indicate that no small phase jump fault occurs in a power grid. The control apparatus 301 may determine the preset second value as the deviation correction amount Δme. Optionally, the second value may be 0.

The control apparatus 301 may determine a sum of the parameter deviation me1 and the deviation correction amount Δme as a target parameter deviation me2. When a phase jump occurs in the power grid, the control apparatus 301 performs adjustment processing on the deviation between the output parameter and the target output parameter. This can accelerate frequency synchronization.

Step S203: Obtain an output frequency based on the adjusted parameter deviation.

The control apparatus 301 may perform integration processing on a ratio $\frac{me2}{J}$ of the adjusted parameter deviation me2 to a virtual inertia J to obtain a reference output frequency ω1.

Step S204: Obtain an output phase based on the output frequency.

The control apparatus 301 may perform integration processing on the reference output frequency ω1 to obtain an output voltage phase θ1 of the power converter. The output voltage phase may be referred to as an output phase. The control apparatus 301 supplies an output phase to the power converter 302, to indicate that a phase of an output voltage of the power converter 302 is the output phase. The power converter 302 may modulate the output phase and output a voltage, and a phase of the output voltage of the power converter 302 is the output phase supplied by the control apparatus 301.

Step S103: Detect the voltage at the point of coupling, and adjust the output voltage phase of the power converter when a phase difference between the output phase and a phase of the voltage at the point of coupling is greater than a preset threshold.

For similarities between the grid-forming control method in this embodiment of this application and the grid-forming control method in the foregoing embodiment, for example, step S101 and step S103, refer to related descriptions in the foregoing embodiment. Details are not described herein again.

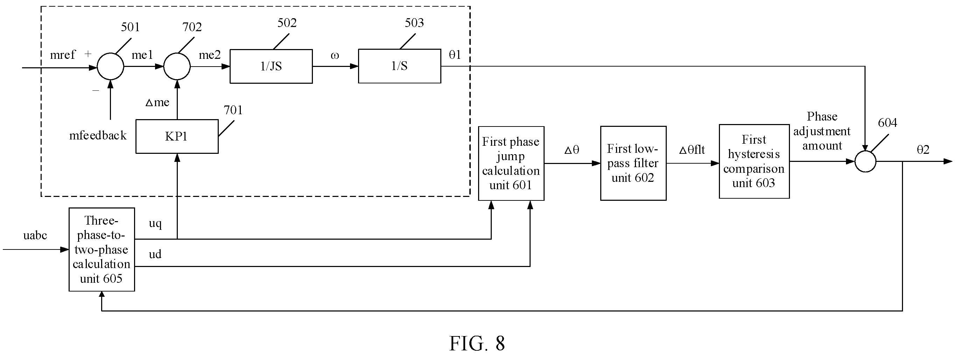

FIG. 8 shows an algorithm procedure of the grid-forming control method in which the control apparatus 301 uses the implementation 1 in step S202. For similarities between FIG. 8 and FIG. 6, refer to related descriptions in FIG. 6. Details are not described herein again. In a dashed-line box in FIG. 8, $m_{feedback}$ indicates the output parameter, $m_{ref}$ indicates the target output parameter, and me1 indicates the deviation between the output parameter and the target output parameter.

The first adder unit 501 may perform step S201 above. The first adder unit 501 may be configured to calculate the difference between $m_{ref}$ and $m_{feedback}$ to obtain a reference parameter deviation me1. A first linear proportion unit 701 may calculate the deviation correction amount Δme based on the q-axis voltage and the first correspondence. A third adder unit 702 may be configured to perform addition processing on the parameter deviation me1 of the output parameter and the deviation correction amount Δme to obtain the adjusted parameter deviation me2, namely, a corrected parameter deviation. The output voltage frequency generator 502 may simulate an inertia unit and a damping unit of a synchronous generator, to obtain the reference output frequency ω1 based on the target parameter deviation me2. For example, the output voltage frequency generator 502 may perform integration processing on the ratio $\frac{me2}{J}$ of the target parameter deviation me2 to the virtual inertia J to obtain the reference output frequency ω1. The phase generator 503 may perform integration processing on the reference output frequency ω1 to obtain the output phase θ1 of the power converter.

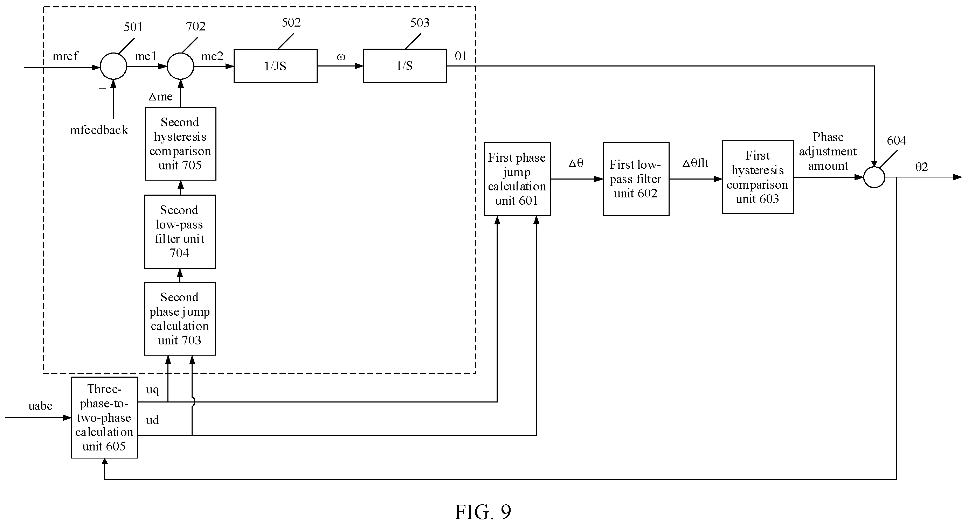

FIG. 9 shows an algorithm procedure of the grid-forming control method in which the control apparatus 301 uses the implementation 2 in step S202. For similarities between FIG. 9 and FIG. 6, refer to related descriptions in FIG. 6. Details are not described herein again. In a dashed-line box in FIG. 9, $m_{feedback}$ indicates the output parameter, $m_{ref}$ indicates the target output parameter, and me1 indicates a reference parameter deviation of the output parameter.

The first adder unit 501 may be configured to calculate the difference between $m_{ref}$ and $m_{feedback}$ to obtain the parameter deviation me1. A second phase jump calculation unit 703, a second low-pass filter unit 704, and a second hysteresis comparison unit 705 may jointly implement the operation in step S202 performed by the control apparatus 301. The second phase jump calculation unit 703 may determine the phase deviation $\Delta\theta$ based on the d-axis voltage ud or the q-axis voltage uq, and input the phase deviation to the second low-pass filter unit 704. The second low-pass filter unit 704 may perform low-pass filtering processing on the phase deviation $\Delta\theta$, to filter out sampling noise or high-frequency disturbance, so as to obtain the phase deviation $\Delta\theta_{flt}$ obtained through filtering processing, and obtain the phase deviation $\Delta\theta_{flt}$ obtained through filtering processing.

The second hysteresis comparison unit 705 may perform hysteresis comparison processing on the phase deviation $\Delta\theta_{flt}$ obtained through filtering processing. For example, when the phase deviation $\Delta\theta_{flt}$ obtained through filtering processing is less than the third phase threshold and greater than the fourth phase threshold, the second hysteresis comparison unit 705 may output the deviation correction amount 0 to the third adder unit 702. Alternatively, when the phase deviation $\Delta\theta_{flt}$ obtained through filtering processing is greater than or equal to the third phase threshold, or the phase deviation $\Delta\theta_{flt}$ is less than or equal to the fourth phase threshold, the deviation correction amount output to the third adder unit 702 is the deviation correction amount calculated based on the first correspondence and the q-axis voltage, or the output deviation correction amount is the deviation correction amount obtained through calculation based on the second correspondence and the phase deviation $\theta_{flt}$ obtained through filtering processing. Optionally, the third phase threshold is 10°, and the fourth phase threshold is -10°.

The third adder unit 702 may perform step S203 above. The third adder unit 702 may be configured to perform addition processing on the parameter deviation me1 of the output parameter and the deviation correction amount $\Delta$me to obtain the adjusted parameter deviation me2. The output voltage frequency generator 502 may simulate an inertia unit and a damping unit of a synchronous generator, to obtain the reference output frequency $\omega1$ based on the target parameter deviation me2. For example, the output voltage frequency generator 502 may perform integration processing on the ratio $\frac{me2}{J}$ of the target parameter deviation me2 to the virtual inertia J to obtain the reference output frequency $\omega1$, and output the reference output frequency to the phase generator 503. The phase generator 503 may perform integration processing on the reference output frequency $\omega1$ to obtain the output voltage phase $\theta1$ of the power converter.

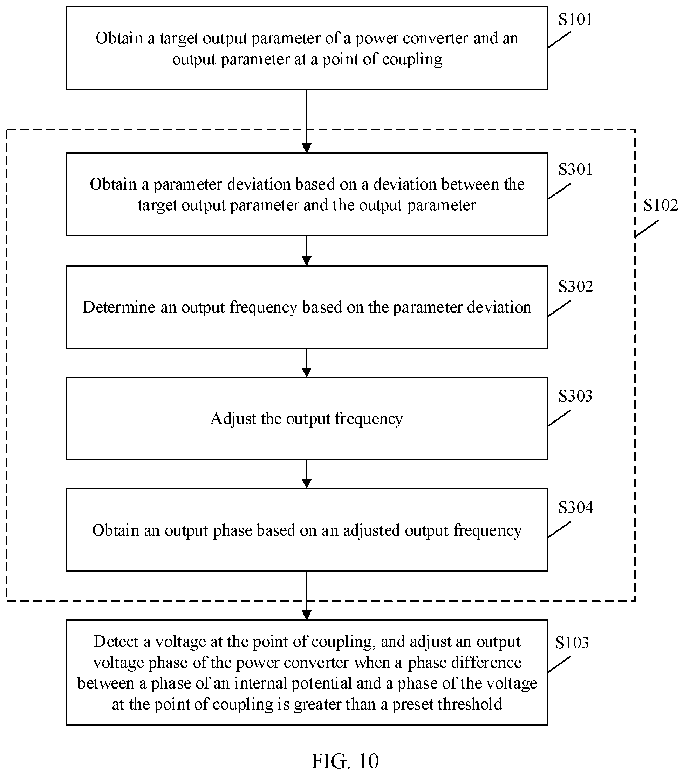

In a possible implementation, based on the grid-forming control method provided in the foregoing embodiment, the control apparatus 301 may perform adjustment processing on the output frequency $\omega1$ in step S102. FIG. 10 is a schematic flowchart of a grid-forming control method according to an example embodiment. The grid-forming control method may include the following steps.

Step S101: Obtain a target output parameter of a power converter and an output parameter at a point of coupling.

Step S301: Obtain a parameter deviation based on a deviation between the target output parameter and the output parameter.

The unadjusted parameter deviation is denoted as me1, and an adjusted parameter deviation is denoted as me2, to distinguish the unadjusted parameter deviation from the adjusted parameter deviation.

Specifically, a control apparatus 301 may obtain the deviation between the output parameter $m_{feedback}$ and the target output parameter $m_{ref}$ through calculation based on the output parameter and the target output parameter, and the deviation may be referred to as the parameter deviation me1. For example, a relationship between the parameter deviation me1 of the output parameter and both the output parameter $m_{feedback}$ and the target output parameter $m_{ref}$ may be me1=$m_{ref}$ - $m_{feedback}$ or me1=$m_{feedback}$ - $m_{ref}$. This is not excessively limited herein.

Step S302: Determine an output frequency based on the parameter deviation.

Specifically, the control apparatus 301 may perform integration processing on a ratio $\frac{me1}{J}$ of the parameter deviation me1 to a virtual inertia J to obtain an output frequency ($\omega$). It may be understood that an operation of adjusting a parameter deviation may not be used in the method shown in FIG. 10.

Step S303: Adjust the output frequency.

The unadjusted output frequency is denoted as an output frequency $\omega1$, and an adjusted output frequency is denoted as an output frequency $\omega2$, to distinguish the unadjusted output frequency from the adjusted output frequency.

The control apparatus 301 may adjust the output frequency $\omega1$ based on a frequency adjustment amount, to obtain the adjusted output frequency $\omega2$.

Specifically, the control apparatus 301 may determine a frequency correction parameter $\Delta m_\omega$ based on a q-axis voltage of a three-phase voltage in a two-phase rotating coordinate system and a preset output frequency correction function. The output frequency correction function may include one or a combination of a non-linear function, a linear function, a piecewise function, a hysteresis function, a filter function, or the like. For example, this embodiment of this application provides a plurality of specific implementations of the output frequency correction function.

Implementation A

The control apparatus 301 may adjust the output frequency based on a quadrature-axis component of a voltage vector and a preset second proportional coefficient. The output frequency correction function may be a third linear function (or referred to as a third correspondence). The third correspondence may represent a correspondence between a q-axis voltage and a frequency correction parameter. In some examples, the third correspondence may be $\Delta m\omega = KP3 \times x + b_3$, where KP3 indicates a preset variable coefficient or a second proportional coefficient, $b_3$ indicates a preset constant, and x represents the q-axis voltage of the three-phase voltage. The control apparatus 301 may determine, based on the preset third correspondence and the q-axis voltage of the three-phase voltage, the frequency correction parameter $\Delta m\omega$ corresponding to the q-axis voltage of the three-phase voltage. Optionally, $b_3$ may be 0. When a power grid is faulty, the q-axis voltage changes accordingly. A target output frequency is determined based on the frequency correction parameter $\Delta m\omega$, to enhance damping. It is assumed that an output location is configured to be the same as a location of the point of coupling. In this case, when a power grid frequency decreases, a power grid phase lags, and a projection $u_q$ of a voltage at the point of coupling (the three-phase voltage) on a q axis is a negative value. That is, the q-axis voltage is a negative value. The frequency correction parameter $\Delta m\omega$ obtained through calculation in step S303 is used to reduce the output frequency $\omega1$, and the adjusted output frequency $\omega2$ is less than the output frequency $\omega1$. In other words, a frequency of an output voltage of the power converter 302 decreases. On the contrary, when a power grid frequency increases, a power grid phase leads, and a projection $u_q$ of a voltage at the point of coupling (the three-phase voltage) on a q axis is a positive value. That is, the q-axis voltage is a positive value. The frequency correction parameter $\Delta m\omega$ obtained through calculation in step S303 is used to increase the output frequency $\omega1$, and the adjusted output frequency $\omega2$ is greater than the output frequency $\omega1$. In other words, a frequency of an output voltage of the power converter 302 increases.

The control apparatus 301 may determine a sum of the frequency correction parameter $\Delta m\omega$ and the output frequency $\omega1$ as the adjusted output frequency $\omega2$.

Implementation B

The control apparatus 301 may determine voltages of a plurality of preset frequency bands based on a quadrature-axis component of a voltage vector, and adjust the output frequency $\omega1$ based on the voltage of each frequency band and a proportional coefficient corresponding to each frequency band. The output frequency correction function may include a plurality of frequency band filter functions, where the plurality of frequency bands are preset. The control apparatus 301 may implement the following process based on the output frequency correction function:

The control apparatus 301 may determine voltages $u_{di}$ of n preset frequency bands fi based on the q-axis voltage, where n indicates a positive integer, fi represents an $i^{th}$ frequency band in the n frequency bands, and i ranges from 1 to n. The control apparatus 301 may obtain a frequency correction parameter $d_{fi}$ of each frequency band fi through calculation based on a voltage $u_{fi}$ of the frequency band and a proportional coefficient $K_{fi}$ corresponding to the frequency band. In some examples, a relationship between the frequency correction parameter $d_{fi}$ and the voltage $u_{di}$ of fi is $d_{fi}=u_{fi} \times K_{fi}$.

An output phase is obtained through calculation based on the output frequency $\omega1$ and a sum of the frequency correction parameters $d_{fi}$ of all the frequency bands. For example, the control apparatus 301 may determine, based on the frequency correction parameters of all the frequency bands, a sum of all frequency correction parameters of the n frequency bands as $\sum_{i=1}^{n} d_{fi}$, so that the control apparatus 301 can determine the frequency correction parameter $\Delta m\omega = \sum_{i=1}^{n} d_{fi}$.

The control apparatus 301 may determine a sum of the frequency correction parameter $\Delta m\omega$ and the output frequency $\omega1$ as the adjusted output frequency $\omega2$.

Step S304: Obtain an output phase based on the adjusted output frequency.

The control apparatus 301 may perform integration processing on a reference output frequency $\omega2$ to obtain an output phase, namely, an output voltage phase $\theta1$. The control apparatus 301 may supply the output phase to the power converter 302, to indicate the power converter 301 to output a voltage, and a phase of the output voltage is equal to or close to the output voltage phase $\theta1$ of the power converter.

Step S103: Detect a voltage at the point of coupling, and adjust the output voltage phase of the power converter when a phase difference of the voltage at the point of coupling within a threshold time is greater than a preset threshold. For similarities between the control method in this embodiment of this application and the control method in the foregoing embodiment, for example, step S101 and step S103, refer to related descriptions in the foregoing embodiment. Details are not described herein again.

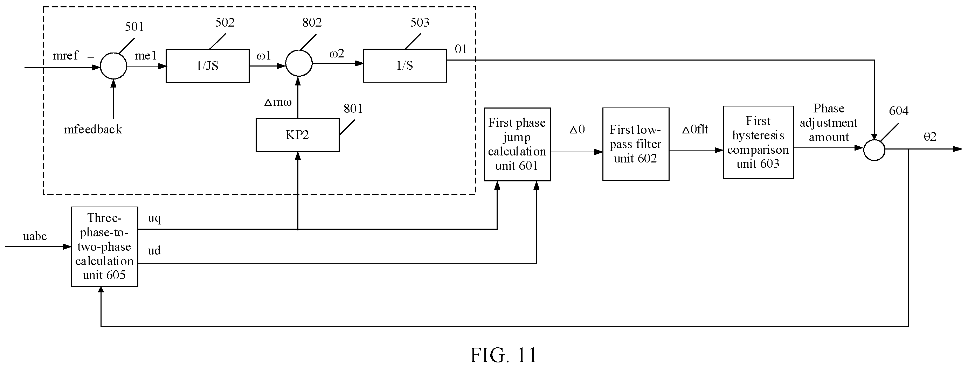

FIG. 11 shows an algorithm procedure of the control method in which the control apparatus 301 uses the implementation A in step S303. For similarities between FIG. 11 and FIG. 6, refer to related descriptions in FIG. 6. Details are not described herein again. In a dashed-line box in FIG. 11, $m_{feedback}$ indicates the output parameter, $m_{ref}$ indicates the target output parameter, and me1 indicates the deviation between the output parameter and the target output parameter.

The first adder unit 501 may be configured to calculate the difference between $m_{ref}$ and $m_{feedback}$ to obtain the parameter deviation me1. The output frequency generator 502 may simulate an inertia unit and a damping unit of a synchronous generator, to obtain a reference output frequency ω1 based on the reference parameter deviation me1.

For example, the output voltage frequency generator 502 may perform integration processing on a ratio $\frac{me1}{J}$ of the reference parameter deviation me1 to the virtual inertia J to obtain the output frequency ω1.

A second linear proportion unit 801 may calculate the frequency correction parameter Δmω based on the q-axis voltage and the third correspondence. A fourth adder unit 802 may be configured to perform addition processing on the output frequency ω1 and the frequency correction parameter Δmω to obtain the adjusted output frequency ω2. The phase generator 503 may perform integration processing on the adjusted output frequency ω2 to obtain a reference phase θ1.

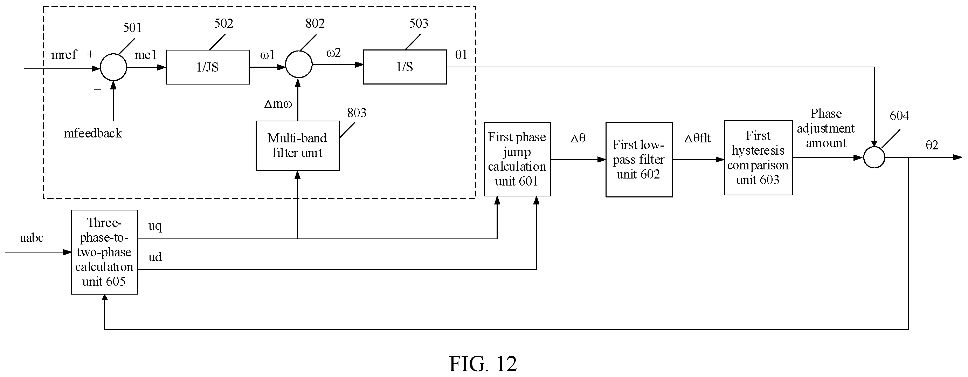

FIG. 12 shows an algorithm procedure of the control method in which the control apparatus 301 uses the implementation B in step S303. For similarities between FIG. 12 and FIG. 6, refer to related descriptions in FIG. 6. Details are not described herein again. In a dashed-line box in FIG. 12, $m_{feedback}$ indicates the output parameter, $m_{ref}$ indicates the target output parameter, and me1 indicates the deviation between the output parameter and the target output parameter.

The first adder unit 501 may be configured to calculate the difference between $m_{ref}$ and $m_{feedback}$ to obtain the parameter deviation me1.

The output frequency generator 502 may simulate an inertia unit and a damping unit of a synchronous generator, to obtain a reference output frequency ω1 based on a reference parameter deviation me1. For example, the output voltage frequency generator 502 may perform integration processing on a ratio $\frac{me1}{J}$ of the reference parameter deviation me1 to the virtual inertia J to obtain the output frequency ω1. A multi-band filter unit 803 may determine the voltages $u_{di}$ of the n preset frequency bands fi based on the q-axis voltage, obtain the frequency correction parameter $d_{fi}$ of each frequency band fi through calculation based on the voltage $u_{fi}$ of the frequency band and the proportional coefficient $K_{fi}$ corresponding to the frequency band, and determine the sum $\sum_{i=1}^{n} d_{fi}$ of all the frequency correction parameters of the n frequency bands as the frequency correction parameter Δmω.

A fourth adder unit 802 may be configured to perform addition processing on the reference output frequency ω1 and the frequency correction parameter Δmω to obtain the adjusted output frequency ω2. The phase generator 503 may perform integration processing on the adjusted output frequency ω2 to obtain a reference phase θ1.

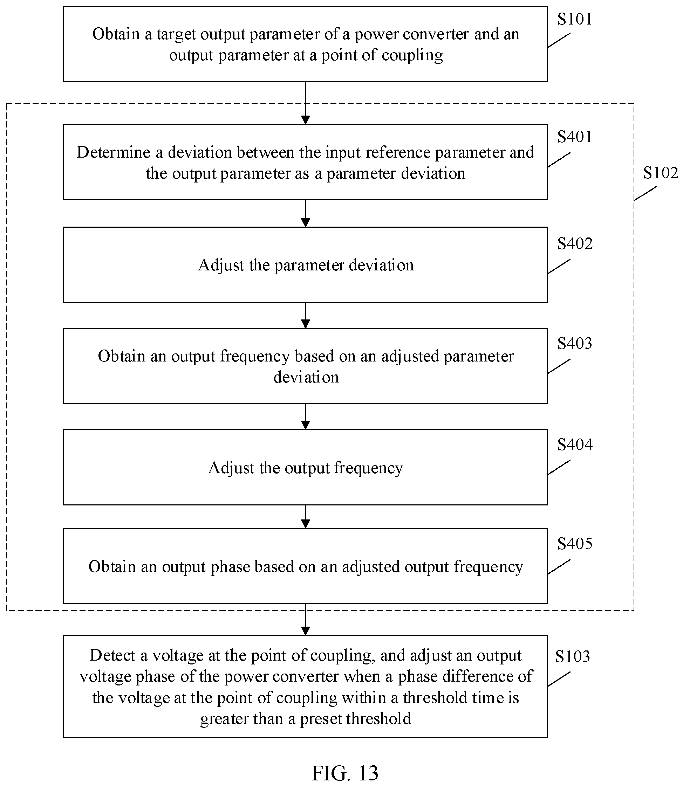

In still another possible implementation, based on the control method provided in the foregoing embodiment, the control apparatus 301 may perform adjustment processing on the reference parameter deviation of the output parameter and perform adjustment processing on the reference output frequency in step S103. FIG. 13 is a schematic flowchart of a grid-forming control method according to an example embodiment. The grid-forming control method may include the following steps.

Step S101: Obtain a target output parameter of a power converter and an output parameter at a point of coupling. Step S401: Determine the deviation between the target output parameter and the output parameter as a parameter deviation.

Step S402: Adjust the parameter deviation.

Step S403: Obtain an output frequency based on an adjusted parameter deviation.

Specifically, for step S401, step S402, and step S403, refer to related descriptions of step S201, step S202, and step S203 in the foregoing embodiment. Details are not described herein again.

Step S404: Adjust the output frequency.

Step S405: Obtain an output phase based on an adjusted output frequency.

Specifically, for step S404 and step S405, refer to related descriptions of step S303 and step 304 in the foregoing embodiment. Details are not described herein again.

Step 103: Detect a voltage at the point of coupling, and adjust an output voltage phase of the power converter when a phase difference of the voltage at the point of coupling within a threshold time is greater than a preset threshold. For similarities between the control method in this embodiment of this application and the control method in the foregoing embodiment, for example, step S101 and step S103, refer to related descriptions in the foregoing embodiment. Details are not described herein again.

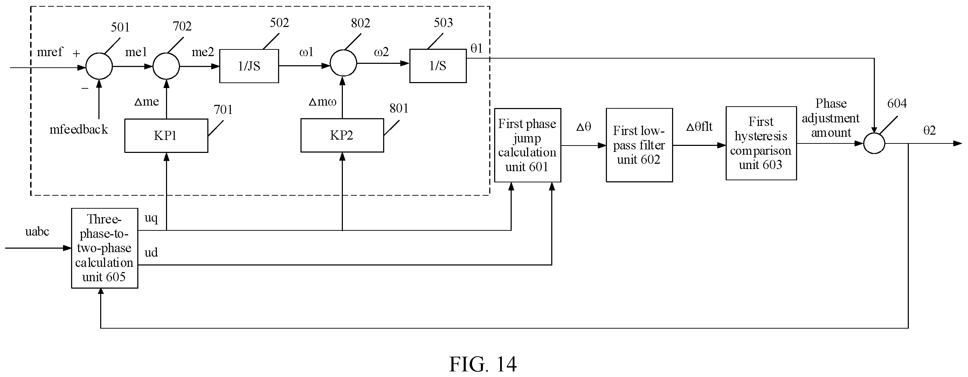

FIG. 14 shows an algorithm procedure in which the control apparatus 301 performs adjustment processing on the parameter deviation in the implementation 1 and performs adjustment processing on the output frequency in the implementation A. For similarities between FIG. 14 and FIG. 6, refer to related descriptions in FIG. 6. Details are not described herein again. In a dashed-line box in FIG. 14, $m_{feedback}$ indicates the output parameter, $m_{ref}$ indicates the target output parameter, and me1 indicates the deviation between the output parameter and the target output parameter.

The first adder unit 501 may be configured to calculate the difference between $m_{ref}$ and $m_{feedback}$ to obtain a parameter deviation me1. The first linear proportion unit 701 may calculate a deviation correction amount Δme based on a q-axis voltage and a first correspondence. The third adder unit 702 may be configured to perform addition processing on the parameter deviation me1 and the deviation correction amount Δme to obtain an adjusted parameter deviation me2. The output frequency generator 502 may simulate an inertia unit and a damping unit of a synchronous generator, to obtain an output frequency $\omega 1$ based on the adjusted parameter deviation me2. For example, the output frequency generator 502 may perform integration processing on a ratio $\frac{me2}{J}$ of the adjusted parameter deviation me2 to a virtual inertia J to obtain the output frequency $\omega 1$. The second linear proportion unit 801 may calculate a frequency correction parameter $\Delta m\omega$ based on the q-axis voltage and a third correspondence. The fourth adder unit 802 may be configured to perform addition processing on the output frequency $\omega 1$ and the frequency correction parameter $\Delta m\omega$ to obtain an adjusted output frequency $\omega 2$. The phase generator 503 may perform integration processing on the adjusted output frequency $\omega 2$ to obtain a reference phase $\theta 1$.

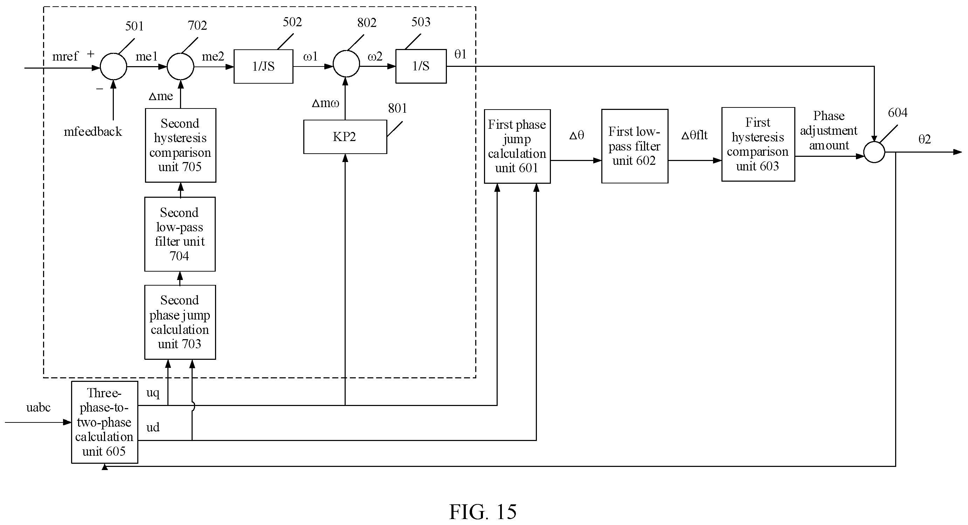

FIG. 15 shows an algorithm procedure in which the control apparatus 301 performs adjustment processing on the parameter deviation in the implementation 2 and performs adjustment processing on the output frequency in the implementation A. For similarities between FIG. 15 and FIG. 6, refer to related descriptions in FIG. 6. Details are not described herein again. In a dashed-line box in FIG. 15, $m_{feedback}$ indicates the output parameter, $m_{ref}$ indicates the target output parameter, and me1 indicates the deviation between the output parameter and the target output parameter.

The first adder unit 501 may be configured to calculate the difference between $m_{ref}$ and $m_{feedback}$ to obtain a parameter deviation me1. The second phase jump calculation unit 703 may determine a phase deviation $\Delta\theta$ based on a d-axis voltage ud or a q-axis voltage uq, and input the phase deviation to the second low-pass filter unit 704. The second low-pass filter unit 704 may perform low-pass filtering processing on the phase deviation $\Delta\theta$, to filter out sampling noise or high-frequency disturbance, so as to obtain a phase deviation $\Delta\theta_{flt}$ obtained through filtering processing, and obtain the phase deviation $\Delta\theta_{flt}$ obtained through filtering processing.

The second hysteresis comparison unit 705 may perform hysteresis comparison processing on the phase deviation $\Delta\theta_{flt}$ obtained through filtering processing. For example, when the phase deviation $\Delta\theta_{flt}$ obtained through filtering processing is less than a third phase threshold and greater than a fourth phase threshold, the second hysteresis comparison unit 705 may output the deviation correction amount 0 to the third adder unit 702. Alternatively, when the phase deviation $\Delta\theta_{flt}$ obtained through filtering processing is greater than or equal to a third phase threshold, or the phase deviation $\Delta\theta_{flt}$ is less than or equal to a fourth phase threshold, the output deviation correction amount output to the third adder unit 702 is the deviation correction amount calculated based on a first correspondence and the q-axis voltage, or the output deviation correction amount is the deviation correction amount obtained through calculation based on a second correspondence and the phase deviation $\theta_{flt}$ obtained through filtering processing. Optionally, the third phase threshold is 10°, and the fourth phase threshold is -10°.

The third adder unit 702 may be configured to perform addition processing on the parameter deviation me1 and the deviation correction amount $\Delta me$ to obtain an adjusted parameter deviation me2. The output frequency generator 502 may simulate an inertia unit and a damping unit of a synchronous generator, to obtain an output frequency $\omega 1$ based on the adjusted parameter deviation me2. For example, the output frequency generator 502 may perform integration processing on a ratio $\frac{me2}{J}$ of the adjusted parameter deviation me2 to a virtual inertia J to obtain the output frequency $\omega 1$. A second linear proportion unit 801 may calculate the frequency correction parameter $\Delta m\omega$ based on the q-axis voltage and the third correspondence. The fourth adder unit 802 may be configured to perform addition processing on the output frequency $\omega 1$ and the frequency correction parameter $\Delta m\omega$ to obtain an adjusted output frequency $\omega 2$. The phase generator 503 may perform integration processing on the adjusted output frequency $\omega 2$ to obtain a reference phase $\theta 1$.

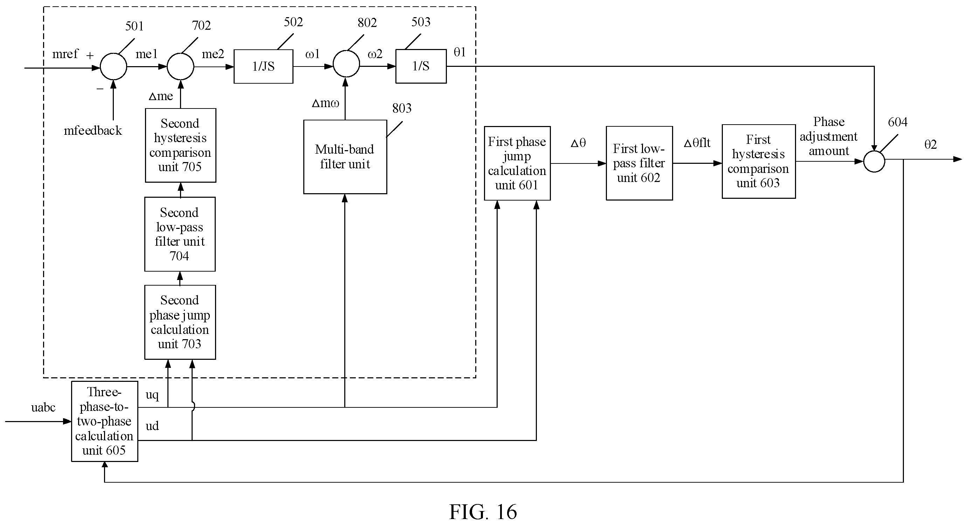

FIG. 16 shows an algorithm procedure in which the control apparatus 301 performs adjustment processing on the parameter deviation in the implementation 2 and performs adjustment processing on the output frequency in the implementation B. For similarities between FIG. 16 and FIG. 6, refer to related descriptions in FIG. 6. Details are not described herein again. In a dashed-line box in FIG. 16, $m_{feedback}$ indicates the output parameter, $m_{ref}$ indicates the target output parameter, and me1 indicates the deviation between the output parameter and the target output parameter.

The first adder unit 501 may be configured to calculate the difference between $m_{ref}$ and $m_{feedback}$ to obtain a reference parameter deviation me1. The second phase jump calculation unit 703 may determine a phase deviation $\Delta\theta$ based on a d-axis voltage ud or a q-axis voltage uq, and input the phase deviation to the second low-pass filter unit 704. The second low-pass filter unit 704 may perform low-pass filtering processing on the phase deviation $\Delta\theta$, to filter out sampling noise or high-frequency disturbance, so as to obtain a phase deviation $\Delta\theta_{flt}$ obtained through filtering processing, and obtain the phase deviation $\Delta\theta_{flt}$ obtained through filtering processing.

The second hysteresis comparison unit 705 may perform hysteresis comparison processing on the phase deviation $\Delta\theta_{flt}$ obtained through filtering processing. For example, when the phase deviation $\Delta\theta_{flt}$ obtained through filtering processing is less than a third phase threshold and greater than a fourth phase threshold, the second hysteresis comparison unit 705 may output the deviation correction amount 0 to the third adder unit 702. Alternatively, when the phase deviation

$\Delta\theta_{flt}$ obtained through filtering processing is greater than or equal to a third phase threshold, or the phase deviation $\Delta\theta_{flt}$ is less than or equal to a fourth phase threshold, the output deviation correction amount output to the third adder unit 702 is the deviation correction amount calculated based on a first correspondence and the q-axis voltage, or the output deviation correction amount is the deviation correction amount obtained through calculation based on a second correspondence and the phase deviation $\theta_{flt}$ obtained through filtering processing. Optionally, the third phase threshold is 10°, and the fourth phase threshold is -10°.

The third adder unit 702 may be configured to perform addition processing on the parameter deviation me1 of the output parameter and the deviation correction amount $\Delta$me to obtain an adjusted parameter deviation me2.

The output voltage frequency generator 502 may simulate an inertia unit and a damping unit of a synchronous generator, to obtain an output frequency $\omega1$ based on the adjusted parameter deviation me2. For example, the output voltage frequency generator 502 may perform integration processing on a ratio $\frac{me2}{J}$ of the adjusted parameter deviation me2 to a virtual inertia J to obtain the output frequency $\omega1$. For example, the output voltage frequency generator 502 may perform integration processing on a ratio $\frac{me2}{J}$ of the adjusted parameter deviation me2 to a virtual inertia J to obtain the reference output frequency $\omega1$.

The multi-band filter unit 803 may determine voltages $u_{di}$ of n preset frequency bands fi based on the q-axis voltage, obtain a frequency correction parameter $d_{fi}$ of each frequency band fi through calculation based on the voltage $u_{fi}$ of the frequency band and a proportional coefficient $K_{fi}$ corresponding to the frequency band, and determine a sum $\sum_{i=1}^{n} d_{fi}$ of all the frequency correction parameters of the n frequency bands as a frequency correction parameter $\Delta m\omega$. The fourth adder unit 802 may be configured to perform addition processing on the output frequency $\omega1$ and the frequency correction parameter $\Delta m\omega$ to obtain an adjusted output frequency $\omega2$. The phase generator 503 may perform integration processing on the adjusted output frequency $\omega2$ to obtain an output voltage phase $\theta1$.

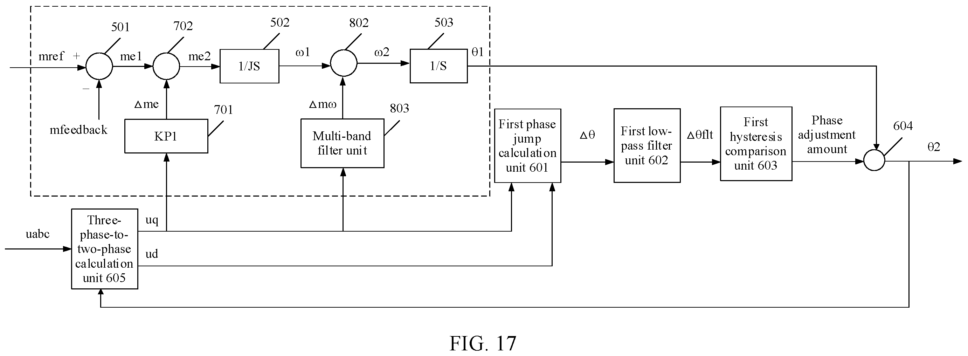

FIG. 17 shows an algorithm procedure in which the control apparatus 301 performs adjustment processing on the reference parameter deviation in the implementation 1 and performs adjustment processing on the output frequency in the implementation B. For similarities between FIG. 17 and FIG. 6, refer to related descriptions in FIG. 6. Details are not described herein again. In a dashed-line box in FIG. 17, $m_{feedback}$ indicates the output parameter, $m_{ref}$ indicates the target output parameter, and me1 indicates the deviation between the output parameter and the target output parameter.

The first adder unit 501 may be configured to calculate the difference between $m_{ref}$ and $m_{feedback}$ to obtain a parameter deviation me1. The first linear proportion unit 701 may calculate a deviation correction amount $\Delta$me based on a q-axis voltage and a first correspondence. The third adder unit 702 may be configured to perform addition processing on a reference parameter deviation me1 of the output parameter and the deviation correction amount $\Delta$me to obtain an adjusted parameter deviation me2. The output frequency generator 502 may simulate an inertia unit and a damping unit of a synchronous generator, to obtain an output frequency $\omega1$ based on the adjusted parameter deviation me2. For example, the output frequency generator 502 may perform integration processing on a ratio $\frac{me2}{J}$ of the adjusted parameter deviation me2 to a virtual inertia J to obtain the output frequency $\omega1$. The multi-band filter unit 803 may determine voltages $u_{di}$ of n preset frequency bands fi based on the q-axis voltage, obtain a frequency correction parameter $d_{fi}$ of each frequency band fi through calculation based on the voltage $u_{fi}$ of the frequency band and a proportional coefficient $K_{fi}$ corresponding to the frequency band, and determine a sum $\sum_{i=1}^{n} d_{fi}$ of all frequency correction parameters of the n frequency bands as the frequency correction parameter $\Delta m\omega$.

The fourth adder unit 802 may be configured to perform addition processing on the output frequency $\omega1$ and the frequency correction parameter $\Delta m\omega$ to obtain an adjusted output frequency $\omega2$. The phase generator 503 may perform integration processing on the adjusted output frequency $\omega2$ to obtain an output voltage phase $\theta1$.

In this embodiment of this application, after the reference parameter deviation is corrected based on the deviation correction amount, the reference output frequency is corrected based on the frequency correction parameter, and the output voltage phase $\theta1$ is adjusted based on the phase adjustment amount, an output voltage phase obtained through calculation $\theta2$ is used, and the output voltage phase $\theta2$ is supplied to the power converter 302. The power converter 302 modulates a direct-current electric energy based on the output voltage phase $\theta2$ to output a voltage, and a phase of the output voltage is equal to or close to the output voltage phase $\theta2$. An output impedance of the power converter is scanned. A phase-frequency characteristic of the output impedance of the power converter is significantly different from a phase-frequency characteristic of an output impedance in a traditional phase-locked synchronization mode. In the traditional phase-locked synchronization mode, the output impedance usually has a phase-frequency characteristic that a phase-frequency curve is similar to a "Z" shape, there is a negative resistance region within a sub/super-synchronous range, and the phase-frequency characteristic is greatly affected by a strength change of the power grid. However, in this application, there is a large difference in impedance characteristic, there is almost no negative resistance region, and there is no typical negative resistance characteristic within a sub-synchronous range and a super-synchronous range in the phase-locked synchronization mode. In addition, a phase-frequency characteristic of the output impedance of the power converter does not change greatly in a process in which strength of the power grid changes from strong to weak.

In a test scenario, the control apparatus delivers a power test instruction to the power converter, where the power test instruction may instruct the power converter to track an actual power feedback value. In other words, the power converter outputs a power based on the actual power feedback value as a target. In this case, an active power feedback value is the same as an active power reference value, and the active power reference value and the active power feedback value remain 0 or are close to 0, so that a power loop is dynamically disabled.

Frequency disturbance, such as a frequency ramp or a frequency step, is applied by simulating a power supply. In a scenario of frequency disturbance of the power supply, the power converter may still operate in an original state, that is, the power converter may track the actual power feedback value. In this case, the impedance of the power converter is scanned. The output impedance of the power converter presents a significant phase-frequency characteristic in the phase-locked synchronization mode, that is, has a characteristic that a phase-frequency curve is similar to a "Z" shape. In addition, the control apparatus controls the power converter to cancel tracking the actual power feedback value. For example, the control apparatus sets the active power reference value to be different from the active power feedback value, and there is a large difference between the active power reference value and the active power feedback value, so that the power loop is enabled. In this case, the impedance of the power converter is scanned. The phase-frequency characteristic of the output impedance of the power converter changes greatly compared with that existing when the active power loop is dynamically disabled, and the typical negative resistance characteristic within the sub/super-synchronous range in the phase-locked loop synchronization mode disappears.

Based on a same inventive concept, an embodiment of this application further provides a control apparatus. The control apparatus includes a processor and a memory. The memory stores computer program instructions. The processor may execute the computer program instructions, to implement the grid-forming control method provided in any one of the foregoing embodiments or the operation performed by the control apparatus 301.

It is clear that persons skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A power supply system, comprising at least one new energy power generation device, wherein the new energy power generation device comprises a power converter and a control apparatus;

   the power converter is coupled to a power grid via a point of coupling, and the power converter is configured to convert direct-current electric energy into alternating-current electric energy under control of the control apparatus; and
   the control apparatus is configured to:

      obtain a target output parameter of the power converter and an output parameter at the point of coupling;
      output an output voltage phase of the power converter based on a difference between the target output parameter and the output parameter; and
      detect a voltage at the point of coupling, and adjust the output voltage phase of the power converter when a phase difference of the voltage at the point of coupling within a threshold time is greater than a preset threshold.

2. The power supply system according to claim 1, wherein when adjusting the output voltage phase of the power converter when the phase difference of the voltage at the point of coupling within the threshold time is greater than the preset threshold, the control apparatus is further configured to:

      obtain a voltage at the point of coupling at a first time point;
      obtain a voltage at the point of coupling at a second time point, wherein
      an interval between the first time point and the second time point is less than the threshold time; and
      obtain the phase difference of the voltage at the point of coupling within the threshold time based on the voltage at the point of coupling at the first time point and the voltage at the point of coupling at the second time point.

3. The power supply system according to claim 1, wherein when adjusting the output voltage phase of the power converter when the phase difference of the voltage at the point of coupling within the threshold time is greater than the preset threshold, the control apparatus is further configured to:

obtain a three-phase voltage at the point of coupling;
determine a voltage vector of the three-phase voltage in a direct axis-quadrature axis coordinate system corresponding to the output voltage phase output by the control apparatus;
determine the phase difference based on the voltage vector; and
adjust the output voltage phase of the power converter based on the phase difference.

4. The power supply system according to claim 3, wherein when adjusting the output voltage phase of the power converter based on the phase difference, the control apparatus is specifically configured to:

if the phase difference is greater than a first phase threshold, adjust the output voltage phase based on the phase difference, wherein an adjustment value is the phase difference, and the first phase threshold is greater than 0; or
if the phase difference is less than the first phase threshold, increase the output voltage phase by a preset first value.

5. The power supply system according to any one of claims 1 to 4, wherein the preset threshold is greater than 0.

6. The power supply system according to any one of claims 1 to 5, wherein an output parameter of the power converter at the point of coupling is any one of the following parameters:
an active power output by the power converter, an active current output by the power converter, a direct current voltage on a direct current side of the power converter, and a square value of the direct current voltage.

7. The power supply system according to claim 1, wherein when outputting the output voltage phase of the power converter based on the difference between the target output parameter and the output parameter, the control apparatus is specifically configured to:

obtain a parameter deviation based on the deviation between the target output parameter and the output parameter;
obtain an output frequency based on the parameter deviation;
obtain an output phase based on the output frequency; and
output the output voltage phase of the power converter by modulating the output phase by the power converter.

8. The power supply system according to claim 7, wherein when obtaining the parameter deviation based on the deviation between the target output parameter and the output parameter, the control apparatus is further configured to:
adjust the parameter deviation based on a quadrature-axis component of the voltage vector and a preset first proportional coefficient.

9. The power supply system according to claim 8, wherein when obtaining the parameter deviation based on the deviation between the target output parameter and the output parameter, the control apparatus is specifically configured to:

if the phase difference is greater than a third phase threshold, adjust the parameter deviation based on the phase difference, wherein the third phase threshold is greater than 0; or
if the phase difference is less than the third phase threshold, increase the parameter deviation by a preset second value.

10. The power supply system according to any one of claims 7 to 9, wherein when obtaining the output frequency based on the parameter deviation, the control apparatus is further configured to:
adjust the output frequency based on the quadrature-axis component of the voltage vector and a preset second proportional coefficient.

11. The power supply system according to any one of claims 7 to 9, wherein when obtaining the output frequency based on the parameter deviation, the control apparatus is specifically configured to:

determine voltages of a plurality of preset frequency bands based on the quadrature-axis component of the voltage vector; and
adjust the output frequency based on the voltage of each frequency band and a proportional coefficient corresponding to each frequency band.

12. The power supply system according to any one of claims 1 to 11, wherein when the phase difference of the voltage at the point of coupling within the threshold time is greater than the preset threshold, an output impedance of the power converter is greater than 0; and
if an output power at the point of coupling is used as an input adjustment instruction for the power converter, when the phase difference of the voltage at the point of coupling within the threshold time is greater than the preset threshold, the output impedance of the power converter changes from greater than 0 to less than 0 in a first time period.

**13.** A grid-forming control method, applied to a new energy power generation device comprising a power converter and a control apparatus, wherein the power converter is coupled to a power grid via a point of coupling; and the method is used to control an output voltage phase of the power converter, and the method comprises:

obtaining a target output parameter of the power converter and an output parameter at the point of coupling;

outputting the output voltage phase of the power converter based on a difference between the target output parameter and the output parameter; and

detecting a voltage at the point of coupling, and adjusting the output voltage phase of the power converter when a phase difference of the voltage at the point of coupling within a threshold time is greater than a preset threshold.

**14.** The method according to claim 13, wherein the adjusting the output voltage phase of the power converter when a phase difference of the voltage at the point of coupling within a threshold time is greater than a preset threshold further comprises:

obtaining a voltage at the point of coupling at a first time point;

obtaining a voltage at the point of coupling at a second time point, wherein

an interval between the first time point and the second time point is less than the threshold time; and

obtaining the phase difference of the voltage at the point of coupling within the threshold time based on the voltage at the point of coupling at the first time point and the voltage at the point of coupling at the second time point.

**15.** The method according to claim 13, wherein the adjusting the output voltage phase of the power converter when a phase difference of the voltage at the point of coupling within a threshold time is greater than a preset threshold further comprises:

obtaining a three-phase voltage at the point of coupling;

determining a voltage vector of the three-phase voltage in a direct axis-quadrature axis coordinate system corresponding to the output phase of the control apparatus;

determining the phase difference based on the voltage vector; and

adjusting the output voltage phase of the power converter based on the phase difference.

**16.** The method according to claim 15, wherein the adjusting the output voltage phase of the power converter based on the phase difference comprises:

if the phase difference is greater than a first phase threshold, adjusting the output phase based on the phase difference, wherein an adjustment value is the phase difference, and the first phase threshold is greater than 0; or

if the phase difference is less than the first phase threshold, increasing the output phase by a preset first value.

**17.** The method according to any one of claims 13 to 16, wherein the preset threshold is greater than 0.

**18.** The method according to any one of claims 13 to 17, wherein the output parameter at the point of coupling is any one of the following parameters:

an active power output by the power converter, an active current output by the power converter, a direct current voltage on a direct current side of the power converter, and a square value of the direct current voltage.

**19.** The method according to claim 13, wherein the outputting the output voltage phase of the power converter based on a difference between the target output parameter and the output parameter comprises:

obtaining a parameter deviation based on the deviation between the target output parameter and the output parameter;

obtaining an output frequency based on the parameter deviation;

obtaining an output phase based on the output frequency; and

outputting the output voltage phase of the power converter after the power converter modulates the output phase.

**20.** The method according to claim 19, wherein the obtaining a parameter deviation based on the deviation between the target output parameter and the output parameter further comprises:

adjusting the parameter deviation based on a quadrature-axis component of the voltage vector and a preset first proportional coefficient.

**21.** The method according to claim 20, wherein the obtaining a parameter deviation based on the deviation between the target output parameter and the output parameter further comprises:

if the phase difference is greater than a third phase threshold, adjusting the parameter deviation based on the phase difference, wherein the third phase threshold is greater than 0; or

if the phase difference is less than the third phase threshold, increasing the parameter deviation by a preset second value.

22. The method according to any one of claims 19 to 21, wherein the obtaining an output frequency based on the parameter deviation further comprises:
adjusting the output frequency based on the quadrature-axis component of the voltage vector and a preset second proportional coefficient.

23. The method according to any one of claims 19 to 21, wherein the obtaining an output frequency based on the parameter deviation further comprises:

    determining voltages of a plurality of preset frequency bands based on the quadrature-axis component of the voltage vector; and
    adjusting the output frequency based on the voltage of each frequency band and a proportional coefficient corresponding to each frequency band.

24. The method according to any one of claims 13 to 23, wherein when the phase difference of the voltage at the point of coupling within the threshold time is greater than the preset threshold, an output impedance of the power converter is greater than 0; and if an output power at the point of coupling is used as an input adjustment instruction for the power converter, when the phase difference of the voltage at the point of coupling within the threshold time is greater than the preset threshold, the output impedance of the power converter changes from greater than 0 to less than 0 in a first time period.

FIG. 1

EP 4 586 440 A1

Power grid — PCC — X — M — Power converter — Direct current capacitor

Collection circuit

Uabc, iabc

Calculate a voltage reference value/ voltage feedback value/reactive power reference value/ reactive power feedback value → Amplitude generator → Grid-forming voltage amplitude

1

Calculate an active power feedback value

2

Active power feedback value

Active power reference value → ⊕ → Active power deviation value → Internal frequency generator → Internal frequency → Phase generator → Grid-forming phase

FIG. 2

New energy power generation device 300

| Control apparatus 301 | Power converter 302 |

Alternating current power system

New energy power generation device

| Control apparatus | Power converter |

FIG. 3

Obtain a target output parameter of a power converter and an output parameter at a point of coupling
S101

Output an output voltage phase of the power converter based on a difference between the target output parameter and the output parameter
S102

Detect a voltage at the point of coupling, and adjust the output voltage phase of the power converter when a phase difference of the voltage at the point of coupling within a threshold time is greater than a preset threshold
S103

FIG. 4

FIG. 5

EP 4 586 440 A1

θ1

First phase jump calculation unit 601 →Δθ→ First low-pass filter unit 602 →Δθflt→ First hysteresis comparison unit 603 → Phase adjustment amount → ( ) 604 →θ2→

Three-phase-to-two-phase calculation unit 605

ud    uq

uabc

FIG. 6

Obtain a target output parameter of a power converter and an output parameter at a point of coupling — S101

Obtain a parameter deviation based on a deviation between the target output parameter and the output parameter — S201

Adjust the parameter deviation — S202

Obtain an output frequency based on an adjusted parameter deviation — S203

Obtain an output phase based on the output frequency — S204

S102

Detect a voltage at the point of coupling, and adjust an output voltage phase of the power converter when a phase difference of the voltage at the point of coupling within a threshold time is greater than a preset threshold — S103

FIG. 7

FIG. 8

FIG. 9

Obtain a target output parameter of a power converter and an
output parameter at a point of coupling — S101

Obtain a parameter deviation based on a deviation between the
target output parameter and the output parameter — S301

Determine an output frequency based on the parameter deviation — S302

Adjust the output frequency — S303

Obtain an output phase based on an adjusted output frequency — S304

S102

Detect a voltage at the point of coupling, and adjust an output
voltage phase of the power converter when a phase difference
between a phase of an internal potential and a phase of the voltage
at the point of coupling is greater than a preset threshold — S103

FIG. 10

FIG. 11

FIG. 12

Obtain a target output parameter of a power converter and an output parameter at a point of coupling — S101

Determine a deviation between the input reference parameter and the output parameter as a parameter deviation — S401

Adjust the parameter deviation — S402

Obtain an output frequency based on an adjusted parameter deviation — S403

Adjust the output frequency — S404

Obtain an output phase based on an adjusted output frequency — S405

S102

Detect a voltage at the point of coupling, and adjust an output voltage phase of the power converter when a phase difference of the voltage at the point of coupling within a threshold time is greater than a preset threshold — S103

FIG. 13

FIG. 14

FIG. 15

EP 4 586 440 A1

FIG. 16

EP 4 586 440 A1

FIG. 17

## INTERNATIONAL SEARCH REPORT

| International application No. |
| --- |
| **PCT/CN2023/102701** |

### A. CLASSIFICATION OF SUBJECT MATTER

H02J3/40(2006.01)i; H02J3/24(2006.01)i; H02J3/38(2006.01)i

According to International Patent Classification (IPC) or to both national classification and IPC

### B. FIELDS SEARCHED

Minimum documentation searched (classification system followed by classification symbols)

IPC: H02J

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 电源, 发电, 功率, 变换, 直流, 交流, 阈值, power, generate, transfer, DC, AC, threshold

### C. DOCUMENTS CONSIDERED TO BE RELEVANT

| Category* | Citation of document, with indication, where appropriate, of the relevant passages | Relevant to claim No. |
| --- | --- | --- |
| X | CN 114142529 A (HARBIN UNIVERSITY OF SCIENCE AND TECHNOLOGY) 04 March 2022 (2022-03-04) description, paragraphs 2 to 76, and figures 1-6 | 1-24 |
| PX | CN 115589030 A (HUAWEI DIGITAL POWER TECHNOLOGIES CO., LTD.) 10 January 2023 (2023-01-10) claims 1-24 | 1-24 |
| A | CN 115065068 A (HUAZHONG UNIVERSITY OF SCIENCE AND TECHNOLOGY et al.) 16 September 2022 (2022-09-16) entire document | 1-24 |
| A | KR 102244871 B1 (INTERNATIONAL ELECTRIC CO., LTD.) 27 April 2021 (2021-04-27) entire document | 1-24 |

☐ Further documents are listed in the continuation of Box C. ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **24 October 2023** | **25 October 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/102701**

| Patent document cited in search report | | | Publication date (day/month/year) | Patent family member(s) | Publication date (day/month/year) |
|---|---|---|---|---|---|
| CN | 114142529 | A | 04 March 2022 | None | |
| CN | 115589030 | A | 10 January 2023 | None | |
| CN | 115065068 | A | 16 September 2022 | None | |
| KR | 102244871 | B1 | 27 April 2021 | None | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211204453